# EUROPEAN PATENT SPECIFICATION

(11) **EP 2 362 614 B1**
(45) Date of publication and mention of the grant of the patent: **23.08.2017**
(21) Application number: 11153620.7
(22) Date of filing: 08.02.2011
(51) Int. Cl.: H04M 1/2745, H04L 12/58, H04L 29/08

(54) **Mobile terminal and communication service controlling method thereof**
Mobiles Endgerät und Kommunikationsdienststeuerungsverfahren dafür
Terminal mobile et procédé de contrôle de son service de communication

(30) Priority: 17.02.2010 KR 20100014170
(43) Date of publication of application: 31.08.2011
(73) Proprietor: LG ELECTRONICS INC., Yeongdeungpo-gu Seoul 150-721 (KR)
(72) Inventor: Shim, Jae Sung, Seoul 153-801 (KR); Yun, Hoon Sang, Seoul 153-801 (KR); Lim, Chan Seok, Sewoul 153-801 (KR)
(74) Representative: Cabinet Plasseraud

(56) References cited:
- EP-A1- 2 056 568
- WO-A2-2009/134587
- US-A1- 2005 271 187
- US-B1- 7 035 923

## Description

### BACKGROUND OF THE INVENTION

### Field of the Invention

The present invention relates to a mobile terminal, and more particularly, to a mobile terminal and communication service controlling method thereof. Although the present invention is suitable for a wide scope of applications, it is particularly suitable for performing a communication service with at least one counterpart terminal.

### Discussion of the Related Art

Generally, terminals can be classified into mobile/portable terminals and stationary terminals. The mobile terminals can be classified into handheld terminals and vehicle mount terminals according to the use of the terminal.

As functions of the terminal diversify, the terminal is implemented as a multimedia player provided with composite functions such as photographing of photos or moving pictures, playback of music or moving picture files, game playing, broadcast reception, for example.

To support and increase of the terminal functions, it is necessary to consider the improvement of structural parts and/or software parts of the terminal.

Generally, a terminal configured to support an instant messaging service activates the instant messaging service only if an input of a command signal for executing the instant messaging service is received. The terminal is able to display status information on counterpart terminals that are subscribed to mutually perform the instant messaging service.

For instance, document EP 2 056 568 discloses a mobile terminal which receives presence information, displays a menu listing the functions supported by the other party's terminal in a desired method using the presence information, extracts information about the detected preferred contact type set by the other party's terminal from the received presence information and displays the menu in a desired method based on the extracted information.

Document WO 2009/134587 discloses a mobile terminal which analyzes the call history for each mode, calculates a score, relatively weighted according to a set of weighting factors arrived at from considering the current state, and determines which of the available modes is likely to be most appropriate for communicating with other devices

Finally, document US 7 035 923 discloses a presence system which evaluates the state information or communication capabilities from one or more sources to create presence information, including a preferred method or a prioritized list of methods by which to communicate with the user and the presence information is then delivered to subscribers of the presence information.

However, according to the related art, the terminal can be provided with the status information on the counterpart terminals that are subscribed to mutually perform the instant messaging service only if the input of the execution command signal of the instant messaging service is received.

Moreover, the terminal is unable to give a priority to a specific communication service executable using the instant messaging service. The mobile terminal is able to replace the specific communication service by another communication service. Therefore, the related art fails to provide a method of informing a counterpart terminal of a situation where a user has difficulty in performing a specific communication service or a situation where a user is able to perform only a specific communication service.

### SUMMARY OF THE INVENTION

Accordingly, the present invention is directed to a mobile terminal and communication service controlling method thereof that substantially obviates one or more problems due to limitations and disadvantages of the related art.

An object of the present invention is to provide a mobile terminal and communication service controlling method thereof by which counterpart information of a counterpart terminal that is subscribed to mutually perform an instant messaging service can always be provided if a terminal is powered on.

Another object of the present invention is to provide a mobile terminal and communication service controlling method thereof by which counterpart information of a counterpart terminal that is subscribed to mutually perform an instant messaging service can be provided via a phonebook related application.

Another object of the present invention is to provide a mobile terminal and communication service controlling method thereof by which priority or substitute information set for a specific communication service by a counterpart terminal can be provided.

A further object of the present invention is to provide a mobile terminal and communication service controlling method thereof by which a communication service having priority information set by a counterpart terminal is executed prior to other communication services or by which a communication service indicated by substitute information is substituted for a communication service having substitute information set therefore and the substituted communication service is then executed.

Additional advantages, objects, and features of the invention will be set forth in part in the description, which follows, and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

In one aspect of the invention, a mobile terminal comprises the features of claim 1.

In another aspect of the invention a method of controlling a communication service in a mobile terminal comprises the features of claim 11.

It is to be understood that both the foregoing general description and the following detailed. Further embodiments of the mobile terminal and the method of controlling a communication service in a mobile terminal according to the present invention are described in the dependent claims.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a block diagram of a mobile terminal according to one embodiment of the present invention.
FIG. 2 is front-view diagram of a mobile terminal according to one embodiment of the present invention and showing an operational status of the mobile terminal.
FIGS. 3A to 3C are diagrams of structures of a communication system configured to perform an Instant Messaging Service based communication service among a plurality of terminals.
FIGS. 3D to 3E are diagrams of data structures including priority information and substitute information of a counterpart terminal according to the present invention.
FIG. 4 is a first flowchart for a communication service controlling method in a mobile terminal according to one embodiment of the present invention.
FIGS. 5A to 6B are diagrams for displaying a counterpart list according to the present invention.
FIGS. 7A to 7D are diagrams for displaying announcement information of a priority information setting having a counterpart list according to the present invention.
FIGS. 8A to 8C are diagrams for sorting and displaying a counterpart list according to the present invention.
FIGS. 9A to 9E are diagrams for displaying a communication service list relevant to specific counterpart information according to the present invention.
FIGS. 10A to 10C are diagrams for executing a communication service for which priority information on specific counterpart information is set according to the present invention.
FIGS. 11A and 11B are diagrams for displaying a counterpart information list corresponding to search information according to the present invention.
FIGS. 12A to 12D are diagrams for executing a priority information setting with priority according to the present invention.
FIGS. 13A to 13C are diagrams for executing a priority information setting in case of a call connection failure according to the present invention.
FIG. 14 is a second flowchart for a communication service controlling method in a mobile terminal according to one embodiment of the present invention.
FIGS. 15A and 15B are diagrams for displaying announcement information of a substitute information set communication service having a counterpart list according to the present invention.
FIGS. 16A to 16E are diagrams for displaying a communication service list relevant to specific counterpart information according to the present invention.
FIGS. 17A and 17B are diagrams for executing a communication service indicated by substitute information for specific counterpart information according to the present invention.
FIG. 18 is a third flowchart for a communication service controlling method in a mobile terminal according to one embodiment of the present invention.
FIGS. 19A to 19D are diagrams for setting priority information per service according to the present invention.
FIGS. 20A to 20C are diagrams for setting substitute information per communication service according to the present invention.
FIGS. 21A and 21B are diagrams for discriminatively displaying a priority information setting per category according to the present invention.
FIGS. 22A to 22E are diagrams for setting a valid condition of priority/substitute information according to the present invention.
FIGS. 23A and 23B are diagrams for displaying announcement information of a priority/substitute information set communication service according to the present invention.
FIG. 24 is a diagram for setting a communication service announcing method in accordance with a presence or non-presence of a priority setting according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts. The suffixes 'module' and 'unit' used for constituent elements disclosed in the following description is intended merely for easy description of the specification, and the suffix itself does not give any special meaning or function.

First of all, mobile terminals described in this disclosure can include a mobile phone, a smart phone, a laptop computer, a digital broadcast terminal, a PDA (personal digital assistants), a PMP (portable multimedia player) and a navigation system.

Except for a case applicable to a mobile terminal only, it is apparent to those skilled in the art that the configurations according to embodiments described herein are also applicable to a stationary terminal, such as a digital TV or a desktop computer.

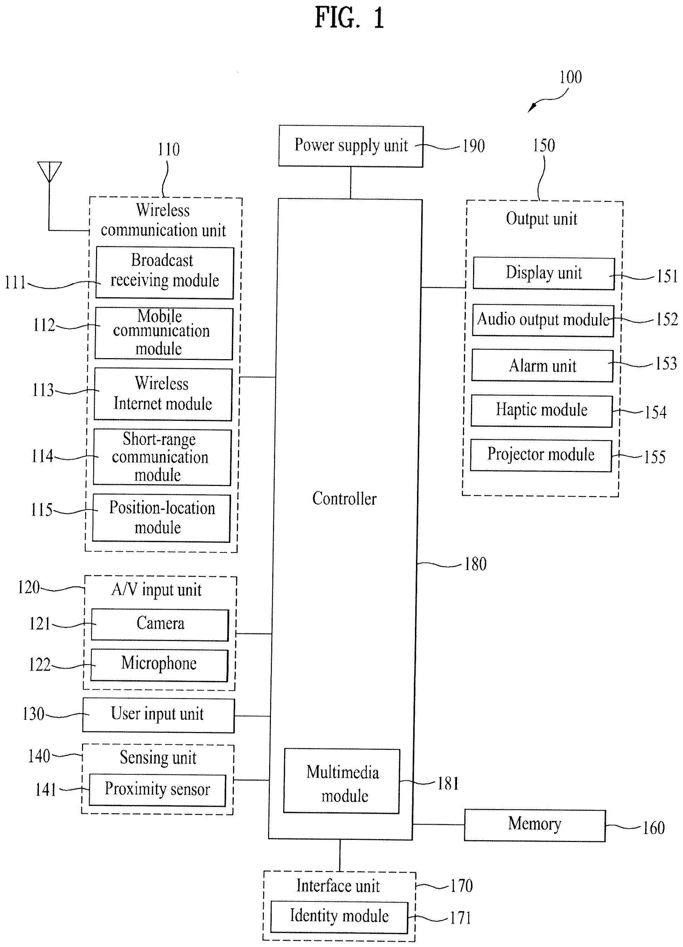

FIG. 1 is a block diagram of a mobile terminal according to one embodiment of the present invention. Referring to FIG. 1, a mobile terminal 100 according to one embodiment of the present invention includes a wireless communication unit 110, an A/V (audio/video) input unit 120, a user input unit 130, a sensing unit 140, an output unit 150, a memory 160, an interface unit 170, a controller 180 and a power supply unit 190. FIG. 1 shows the mobile terminal 100 having various components, but it is understood that implementing all of the illustrated components is not a requirement. More or fewer components may alternatively be implemented.

In the following description, the above elements of the mobile terminal 100 are explained in sequence. First of all, the wireless communication unit 110 typically includes one or more components that permit wireless communication between the mobile terminal 100 and a wireless communication system or network within which the mobile terminal 100 is located. For instance, the wireless communication unit 110 can include a broadcast receiving module 111, a mobile communication module 112, a wireless Internet module 113, a short-range communication module 114 and a position-location module 115.

The broadcast receiving module 111 receives a broadcast signal and/or broadcast associated information from an external broadcast managing server via a broadcast channel. The broadcast channel may include a satellite channel and a terrestrial channel.

The broadcast managing server generally refers to a server that generates and transmits a broadcast signal and/or broadcast associated information or a server that is provided with a previously generated broadcast signal and/or broadcast associated information and then transmits the provided signal or information to a terminal. The broadcast signal may be implemented as a TV broadcast signal, a radio broadcast signal, and a data broadcast signal, among others. If desired, the broadcast signal may further include a broadcast signal combined with a TV or radio broadcast signal.

The broadcast associated information includes information associated with a broadcast channel, a broadcast program or a broadcast service provider. The broadcast associated information can be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and an electronic service guide (ESG) of digital video broadcast-handheld (DVB-H).

The broadcast receiving module 111 may be configured to receive broadcast signals transmitted from various types of broadcast systems. By nonlimiting example, such broadcasting systems include digital multimedia broadcasting-terrestrial (DMB-T), digital multimedia broadcasting-satellite (DMB-S), digital video broadcast-handheld (DVB-H), the data broadcasting system known as media forward link only (MediaFLO®) and integrated services digital broadcast-terrestrial (ISDB-T). Optionally, the broadcast receiving module 111 can be configured to be suitable for other broadcasting systems as well as the above-explained digital broadcasting systems.

The broadcast signal and/or broadcast associated information received by the broadcast receiving module 111 may be stored in a suitable device, such as the memory 160.

The mobile communication module 112 transmits/receives wireless signals to/from one or more network entities (e.g., base station, external terminal, server, etc.). Such wireless signals may represent audio, video and data according to text/multimedia message transceivings, among others.

The wireless Internet module 113 supports Internet access for the mobile terminal 100. The wireless Internet module 113 may be internally or externally coupled to the mobile terminal 100. In this case, the wireless Internet technology can include WLAN (Wireless LAN), Wi-Fi®, Wibro® (Wireless broadband), Wimax® (World Interoperability for Microwave Access) or HSDPA (High Speed Downlink Packet Access).

The short-range communication module 114 facilitates relatively short-range communications. Suitable technologies for implementing this module include radio frequency identification (RFID), infrared data association (IrDA), ultra-wideband (UWB), as well as the networking technologies commonly referred to as Bluetooth® and ZigBee®, to name a few.

The position-location module 115 identifies or otherwise obtains the location of the mobile terminal 100. If desired, the position-location module 115 may be implemented with a global positioning system (GPS) module.

Referring to FIG. 1, the audio/video (AN) input unit 120 is configured to provide audio or video signal input to the mobile terminal 100. As shown, the A/V input unit 120 includes a camera 121 and a microphone 122. The camera 121 receives and processes image frames of still pictures or video, which are obtained by an image sensor in a video call mode or a photographing mode. The processed image frames can be displayed on the display unit 151.

The image frames processed by the camera 121 can be stored in the memory 160 or can be externally transmitted via the wireless communication unit 110. Optionally, at least two cameras 121 can be provided in the mobile terminal 100 according to environment of usage.

The microphone 122 receives an external audio signal while the portable device is in a particular mode, such as phone call mode, recording mode and voice recognition mode. The audio signal is processed and converted into electric audio data. The processed audio data is transformed into a format transmittable to a mobile communication base station via the mobile communication module 112 during a call mode. The microphone 122 typically includes assorted noise removing algorithms to remove noise generated in the course of receiving the external audio signal.

The user input unit 130 generates input data in response to user manipulation of an associated input device or devices. Examples of such devices include a keypad, a dome switch, a touchpad (e.g., static pressure/capacitance), a jog wheel and a jog switch.

The sensing unit 140 provides sensing signals for controlling operations of the mobile terminal 100 using status measurements of various aspects of the mobile terminal. For instance, the sensing unit 140 may detect an open/closed status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, orientation or acceleration/deceleration of the mobile terminal 100. The sensing unit 140 can include a proximity sensor 141.

As an example, consider the mobile terminal 100 configured as a slide-type mobile terminal. In this configuration, the sensing unit 140 may sense whether a sliding portion of the mobile terminal is open or closed. Other examples include the sensing unit 140 sensing the presence or absence of power provided by the power supply unit 190, the presence or absence of a coupling or other connection between the interface unit 170 and an external device.

The output unit 150 generates outputs relevant to the senses of sight, hearing and touch. The output unit 150 may include the display unit 151, an audio output module 152, an alarm unit 153, a haptic module 154 and a projector module 155.

The display unit 151 is typically implemented to visually display (output) information associated with the mobile terminal 100. For instance, if the mobile terminal 100 is operating in a phone call mode, the display unit 151 will generally provide a user interface (UI) or graphical user interface (GUI) which includes information associated with placing, conducting, and terminating a phone call. As another example, if the mobile terminal 100 is in a video call mode or a photographing mode, the display unit 151 may additionally or alternatively display images that are associated with these modes, the UI or the GUI.

The display module 151 may be implemented using known display technologies including, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the above displays can be implemented as a transparent or optical transmittive type, which are referred to as a transparent displays. As a representative example for the transparent display, there is TOLED (transparent OLED). A rear configuration of the display unit 151 can be implemented in the optical transmittive type as well. In this configuration, a user is able to see an object positioned behind a terminal body via the area occupied by the display unit 151 of the terminal body.

At least two display units 151 can be provided in the mobile terminal 100 in accordance with the implemented configuration of the mobile terminal 100. For instance, a plurality of display units can be arranged on a single face of the mobile terminal 100 in a manner of being spaced apart from each other or being built in one body. Alternatively, a plurality of display units can be arranged on different faces of the mobile terminal 100.

In case that the display unit 151 and a sensor for detecting a touch action (hereinafter called 'touch sensor') are configured as a mutual layer structure (hereinafter called 'touchscreen'), a user is able to use the display unit 151 as an input device as well as an output device. In this case, the touch sensor can be configured as a touch film, a touch sheet or a touchpad.

The touch sensor can be configured to convert a pressure applied to a specific portion of the display unit 151 or a variation of a capacitance generated from a specific portion of the display unit 151 to an electric input signal. Moreover, the touch sensor may be configured to detect a pressure of a touch as well as a touched position or size.

When a touch input is made to the touch sensor, a signal(s) corresponding to the touch is transferred to a touch controller (not shown). The touch controller processes the signal(s) and then transfers the processed signal(s) to the controller 180. Therefore, the controller 180 is able to know whether a specific portion of the display unit 151 is touched.

Referring to FIG. 1, the proximity sensor 141 can be provided in an internal area of the mobile terminal 100 enclosed by the touchscreen or around the touchscreen. The proximity sensor 141 is the sensor that detects a presence or non-presence of an object approaching a specific detecting surface or an object existing around the proximity sensor using an electromagnetic field strength or infrared ray without mechanical contact. Hence, the proximity sensor 141 has durability longer than that of a contact type sensor and also has utility wider than that of the contact type sensor.

The proximity sensor 141 can include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor or an infrared proximity sensor. When the touchscreen includes the electrostatic capacity proximity sensor, the touchscreen is configured to detect the proximity of a pointer using a variation of an electric field according to the proximity of the pointer. In this case, the touchscreen (touch sensor) can be classified as the proximity sensor.

In the following description, for clarity, an action of a pointer approaching, without contacting, the touchscreen is recognized as being located on the touchscreen and is referred to as a 'proximity touch'. An action of a pointer actually touching the touchscreen is referred to as a 'contact touch'. The position on the touchscreen proximity-touched by the pointer refers to the position of the pointer that vertically opposes the touchscreen when the pointer performs the proximity touch.

The proximity sensor 141 detects a proximity touch and a proximity touch pattern (e.g., proximity touch distance, proximity touch duration, proximity touch position, proximity touch shift state, etc.). Information corresponding to the detected proximity touch action and the detected proximity touch pattern can be output to the touchscreen.

The audio output module 152 functions in various modes including a call-receiving mode, a call-placing mode, a recording mode, a voice recognition mode and a broadcast reception mode to output audio data that is received from the wireless communication unit 110 or is stored in the memory 160. During operation, the audio output module 152 outputs audio relating to a particular function (e.g., call received, message received, etc.). The audio output module 152 is often implemented using one or more speakers, buzzers, other audio producing devices, and combinations thereof.

The alarm unit 153 outputs a signal for announcing the occurrence of a particular event associated with the mobile terminal 100. Typical events include a call received event, a message received event and a touch input received event. The alarm unit 153 is able to output a signal for announcing the event occurrence by way of vibration as well as a video or audio signal. The video or audio signal can be output via the display unit 151 or the audio output unit 152. Hence, the display unit 151 or the audio output module 152 can be regarded as a part of the alarm unit 153.

The haptic module 154 generates various tactile effects that can be sensed by a user. Vibration is a representative one of the tactile effects generated by the haptic module 154. Strength and pattern of the vibration generated by the haptic module 154 are controllable. For instance, different vibrations can be output in a manner of being synthesized together or can be output in sequence.

The haptic module 154 is able to generate various tactile effects besides the vibration. For instance, the haptic module 154 may generate an effect of an arrangement of pins vertically moving against skin being touched (contacted), an air injection force or an air suction force though an injection hole or a suction hole, an effect of a skim over a skin surface, an effect of contact with an electrode, an effect of electrostatic force, an effect of a hot or cold feeling using an endothermic or exothermic device, or other haptic effects produced by other haptic effect devices.

The haptic module 154 can be implemented to enable a user to sense the tactile effect through a muscular sense in a finger or arm as well, as transfer the tactile effect through direct contact. Optionally, at least two haptic modules 154 can be provided in the mobile terminal 100 in accordance with the corresponding configuration type of the mobile terminal 100.

The projector module 155 is an element for performing an image projector function using the mobile terminal 100. The projector module 155 is able to display an image, which is identical to or partially different from at least the image displayed on the display unit 151, on an external screen or wall according to a control signal of the controller 180.

In particular, the projector module 155 can include a light source (not shown in the drawing) generating light (e.g., laser) for projecting an image externally, an image producing means (not shown in the drawing) for producing an image to output externally using the light generated from the light source, and a lens (not shown in the drawing) for enlarging the output image in a predetermined focus distance. The projector module 155 can further include a device (not shown in the drawing) for adjusting an image projected direction by mechanically moving the lens or the entire module.

The projector module 155 can be classified into a CRT (cathode ray tube) module, an LCD (liquid crystal display) module or a DLP (digital light processing) module according to a device type of a display means. In particular, the DLP module is operated by a mechanism that enables the light generated from the light source to reflect on a DMD (digital micro-mirror device) chip and can be advantageous for the downsizing of the projector module 151.

Preferably, the projector module 155 can be provided in a lengthwise direction of a lateral, front or back side of the mobile terminal 100. It is understood that the projector module 155 can be provided at any portion of the mobile terminal 100 according to the necessity thereof.

The memory 160 is generally used to store various types of data to support the processing, control, and storage requirements of the mobile terminal 100. Examples of such data include program instructions for applications operating on the mobile terminal 100, contact data, phonebook data, messages, audio, still pictures and moving pictures. A recent use history or a cumulative use frequency of each data (e.g., use frequency for each phonebook, each message or each multimedia) can be stored in the memory 160. Moreover, data for various patterns of vibration and/or sound output in case of a touch input to the touchscreen can be stored in the memory 160.

The memory 160 may be implemented using any type or combination of suitable volatile and nonvolatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, XD memory, etc.), or other similar memory or data storage device. The mobile terminal 100 is able to operate in association with web storage for performing a storage function of the memory 160 via the Internet.

The interface unit 170 is often implemented to couple the mobile terminal 100 with external devices. The interface unit 170 receives data from the external devices or is supplied with the power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module 171, audio input/output ports, video input/output ports or an earphone port.

The identity module 171 is a chip for storing various kinds of information for authenticating a use authority of the mobile terminal 100 and can include User Identity Module (UIM), Subscriber Identity Module (SIM) or Universal Subscriber Identity Module (USIM). A device having the identity module 171 (hereinafter called 'identity device') can be manufactured as a smart card. Therefore, the identity device 171 is connectible to the mobile terminal 100 via a corresponding port.

When the mobile terminal 100 is connected to an external cradle, the interface unit 170 becomes a passage for supplying the mobile terminal 100 with power from the cradle or a passage for delivering various command signals input from the cradle by a user to the mobile terminal 100. Each of the various command signals input from the cradle or the power can operate as a signal enabling the mobile terminal 100 to recognize that it is correctly loaded in the cradle.

The controller 180 typically controls the overall operations of the mobile terminal 100. For example, the controller 180 performs the control and processing associated with voice calls, data communications and video calls. The controller 180 may include a multimedia module 181 that provides multimedia playback. The multimedia module 181 may be configured as part of the controller 180 or implemented as a separate component. The controller 180 may be configured to perform a pattern recognizing process for recognizing a writing input and a picture drawing input performed on the touchscreen as characters or images, respectively.

The power supply unit 190 provides power required by the various components of the mobile terminal 100. The power may be internal power, external power, or combinations thereof.

Various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory, such as the memory 160, and executed by a controller or processor, such as the controller 180.

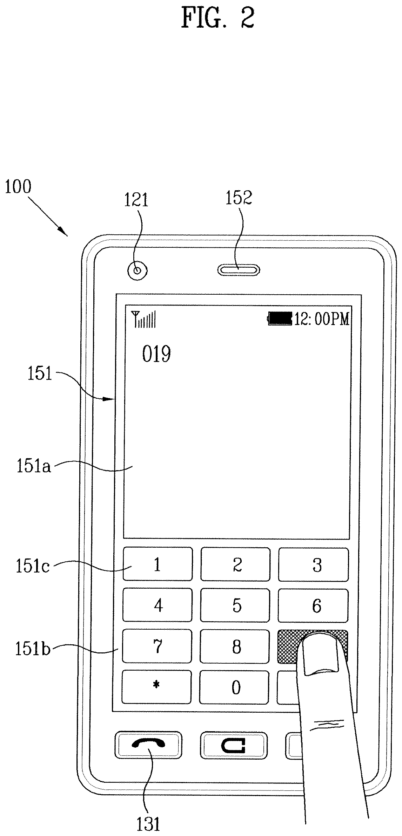

Interconnected operational mechanism between the display unit 151 and a touchpad are explained with reference to FIG. 2. FIG. 2 is front-view diagram of a mobile terminal 100 according to one embodiment of the present invention for explaining an operational state thereof.

Various kinds of visual information can be displayed on the display unit 151. The information can be displayed as characters, numerals, symbols, graphics or icons.

In order to input the information, at least one of the characters, numerals, symbols, graphics or icons is represented as a single predetermined array to be implemented in a keypad formation. The keypad formation can be so-called 'soft keys'. FIG. 2 shows that a touch applied to a soft key is input through a front face of a terminal body.

The display unit 151 is operable through an entire area or by being divided into a plurality of regions. When the display unit 151 is divided into a plurality of regions, the plurality of the regions can be configured to be interoperable.

For instance, an output window 151a and an input window 151b are displayed on the display unit 151. A soft key 151c representing a digit for inputting a phone number or other information is output to the input window 151b. If the soft key 151c is touched, a digit corresponding to the touched soft key is output to the output window 151a. If a manipulating unit 131 is manipulated, a call connection for the phone number displayed on the output window 151a is attempted.

An instant messaging service (hereinafter abbreviated "IMS") mentioned in this disclosure can include a service for transmitting and receiving data via the Internet among a plurality of terminals that are subscribed to perform IMS based communication services. The IMS can also include a service for providing current status information of each of a plurality of the terminals by real time.

A mobile terminal 100 mentioned in this disclosure can include at least one of the components shown in FIG. 1. The mobile terminal 100 is able to perform IMS based communication service(s) with at least one counterpart terminals.

A communication system mentioned in this disclosure includes a system enabling IMS based communication services to be performed among a plurality of terminals. The system can include at least one communication service management server, which will be described later, and a plurality of terminals.

A communication service mentioned in this disclosure can include at least one of a text chat service, a voice chat service, a video chat service, a message service, an email service, a voice call service, a video call service, a file transmission service, a video sharing service and an image sharing service.

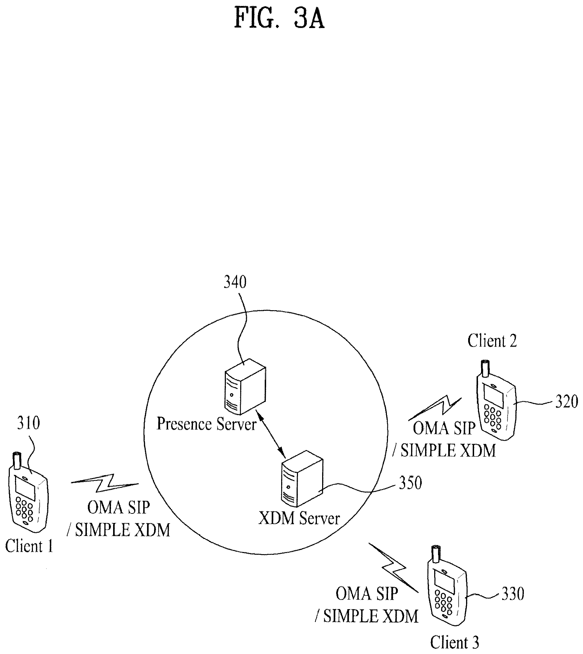

In the following description, a communication system configured to perform an IMS based communication service is explained with reference to FIGS. 3A to 3C. FIGS. 3A to 3C are diagrams of structures of a communication system configured to perform an IMS based communication service among a plurality of terminals according to the present invention.

Referring to FIG. 3A, a communication system according to the present invention includes a plurality of client terminals 310, 320 and 330, each of which performs an IMS based communication service. The communication system also includes communication service management servers 340 and 350 responsible for data management and transceiving according to the execution of the IMS based communication service among a plurality of the client terminals 310, 320 and 330.

In this case, a status information management server (i.e., a presence server) 340 corresponding to one of the communication service management servers manages status information of the client terminal 310, 320 or 330. If the status information of the corresponding client terminal is changed, the presence server 340 notifies the changed status information to another client terminal. A content management server 350 or XDM (Xml Document Management) corresponding to the other one of the communication service management servers stores and manages a client list, status information rules and contents. A plurality of the client terminals 310, 320 and 330 are subscribed with the contents management server 350 to mutually perform the IMS based communication service.

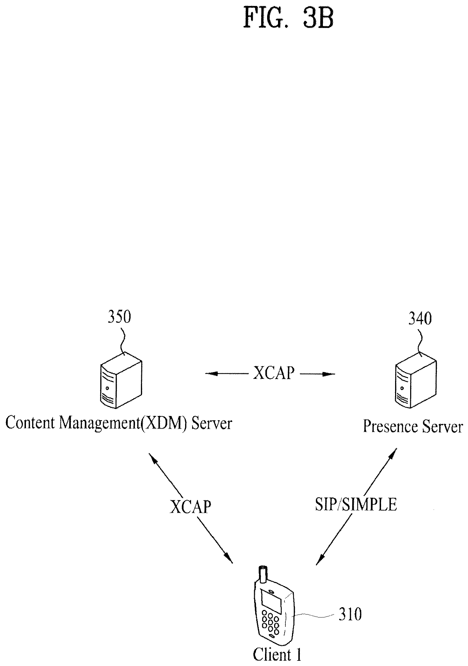

Referring to FIG. 3B, the client terminal 310 or the status information management server 340 is able to access the XDM server 350 via XCAP (the extensible markup language configuration access protocol). Of course, other protocols are available as well as the XCAP.

In particular, the client terminal 310 is able to perform status information subscription (subscribe), status information download (notify) and status information upload (publish) using an SIP (session initiate protocol) message together with the status information management server 340. The status information management server 340 is able to retrieve the information stored in the content management server 350 via the XCAP.

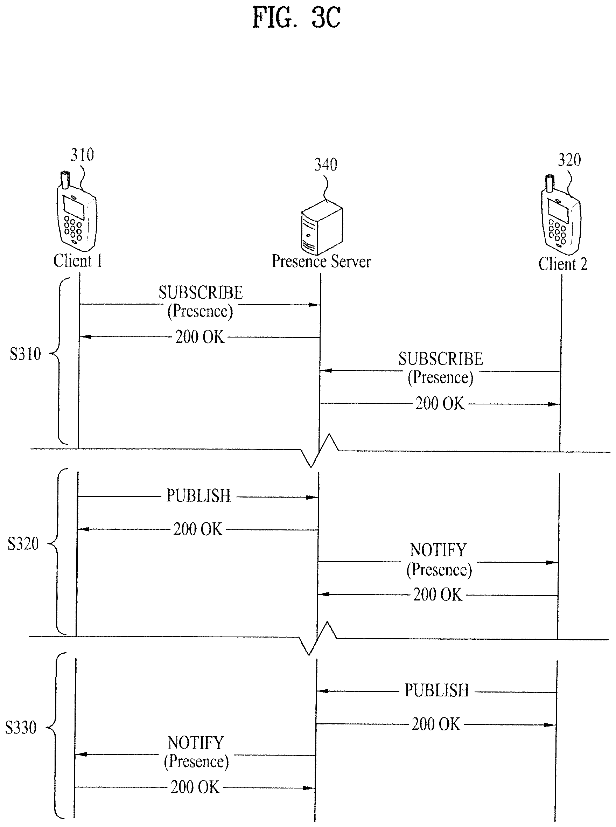

Referring to FIG. 3C, in a status information subscribing step (S310), each of the client terminals 310 and 320 is able to subscribe its status information to the status information management server (Subscribe). In a status information transceiving step (S320) or (S330), if a specific client terminal 310/320 uploads its changed status information to the status information management server 340 (publish), the status information management server 340 is able to notify the changed status information of the specific client terminal 310/320 to the other client terminal 320/310 (notify). Optionally, the status information management server 340 and the contents management server 350 can be combined into a single server.

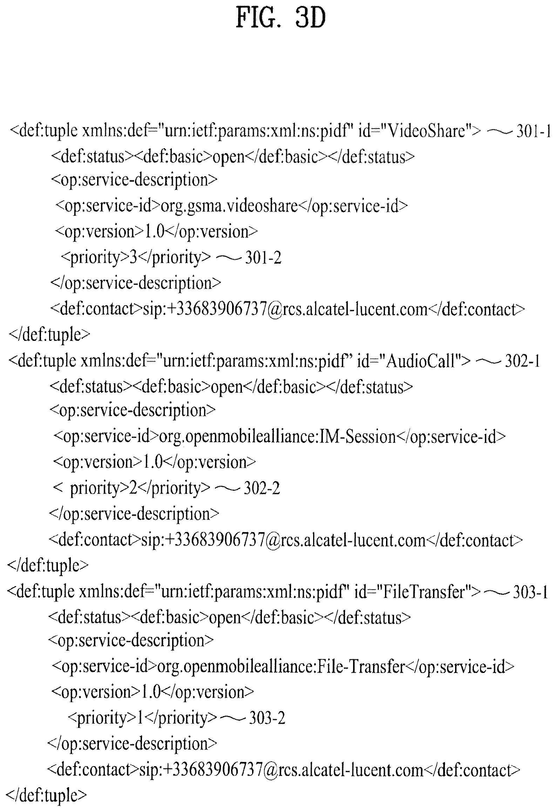

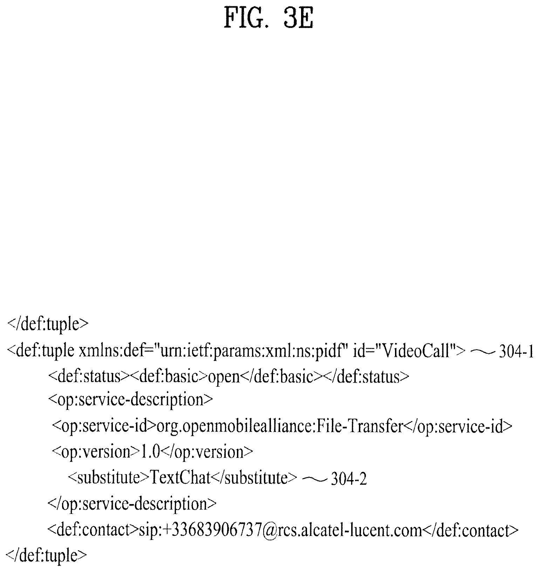

FIGS. 3D and 3E are diagrams of data structures including priority information and substitute information on a counterpart terminal according to the present invention, which shall be explained in detail later.

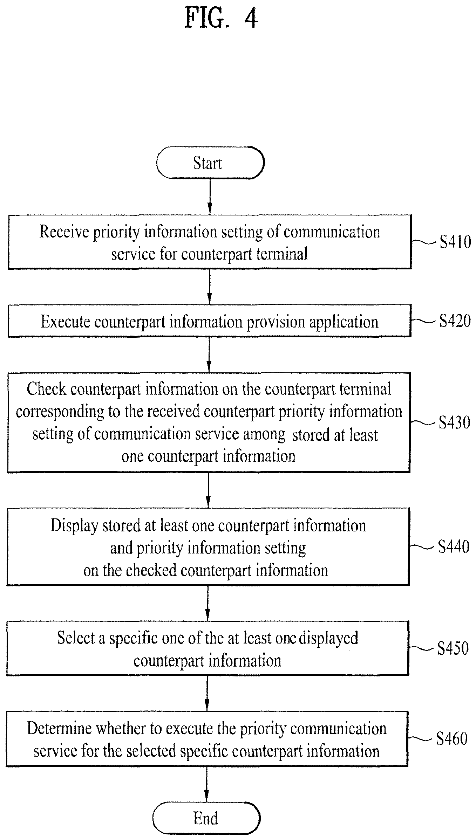

In the following description, a communication service controlling method using priority information is explained with reference to FIGS. 4 to 13C. The mobile terminal 100 mentioned in the following description is able to set and maintain an executable state of an IMS based communication service if terminal power is turned on (always ON state). Of course, the mobile terminal 100 is able to set an executable state of an IMS based communication service only if receiving an input of an execution command signal for executing an IMS based communication service. As the executable state of the IMS based communication service is set, subsequent operations can be performed.

FIG. 4 is a first flowchart for a communication service controlling method in a mobile terminal according to one embodiment of the present invention. Referring to FIG. 4, the mobile terminal 100 receives priority information of a communication service for a counterpart terminal (hereinafter named counterpart priority information) (S410).

In this case, the mobile terminal 100 and the counterpart terminal may have subscribed to the communication service management server 340, 350 to mutually perform an IMS based communication service. Moreover, the communication service management server includes the previously described status information management server 340 or can include a combined server including both the status information management server 340 and the contents management server 350.

The counterpart priority information can include information for giving a priority to a specific communication service that can be performed by the counterpart terminal together with other terminals in order to compare the specific communication service with other communication services. In this case, the counterpart priority information can be set per communication service according to a selection made by a user of the counterpart terminal. This priority information setting process shall be described in detail later.

In order to receive the counterpart priority information, the mobile terminal 100 directly receives the counterpart priority information or is able to receive the priority information, which was transmitted to the communication service management server 340, 350 from the counterpart terminal, from the communication service management server. Moreover, the counterpart priority information is provided as part of the status information of the counterpart terminal or can be provided separate from the status information or the counterpart terminal. For instance, the communication service management server receives the status information, including the priority information, from the counterpart terminal (publish) and is able to transmit the status information including the priority information to all terminals having subscribed to perform the IMS based communication service together with the counterpart terminal, as well as to the mobile terminal 100.

FIG. 3D shows a data structure where the counterpart priority information is included in the status information of the counterpart terminal. The data shown in FIG. 3D includes a field 301-2 indicating that priority information <priority>3 is set for a video sharing service (VideoShare) 301-1, a field 302-2 indicating that priority information <priority>2 is set for an audio call service (AudioCall) 302-1, and a field 303-2 indicating that priority information <priority>1 is set for a file transfer service (FileTransfer) 303-1.

Moreover, the counterpart priority information can be set for at least one communication service. If the counterpart priority information is set for each of a plurality of the communication services, the counterpart priority information can be set to have the same priority or a different priority (e.g., 1^{st} priority, 2^{nd} priority, 3^{rd} priority, etc.).

The receiving step (S410) in FIG. 4 can be performed with periodicity or at a random timing point. In this case, the periodicity or timing point can be set according to an arbitrary determination made by the communication service management server 340, 350 or the mobile terminal 100. Moreover, when there is a logon of the counterpart terminal, a priority information setting/change, or a request made by the mobile terminal 100 or the counterpart terminal, the receiving step (S410) in FIG. 4 can be performed.

In the receiving step (S410) in FIG. 4, the mobile terminal 100 is able to receive counterpart information on the counterpart terminal from the communication service management server 340, 350 or the counterpart terminal together with the priority information. In this case, the counterpart information includes at least one of nickname information, photo information, status information, blog address information or status information.

Referring to FIG. 4, when an input of an execution command signal of a counterpart information provision application is received from a user via the user input unit 130, the mobile terminal 100 executes the counterpart information provision application corresponding to the execution command signal under the control of the controller 180 (S420). In this case, the counterpart information provision application can include a phonebook related application or an IMS related application.

Specifically, if the mobile terminal 100 is in the state of 'Always ON', the mobile terminal 100 is able to always receive the counterpart information on the counterpart terminals (hereinafter called 'IMS subscribed terminals') that have been subscribed to mutually perform the IMS based communication service when the phonebook related application is executed.

Under the control of the controller 180, the mobile terminal 100 checks the counterpart information on the counterpart terminal corresponding to the received counterpart priority information of communication service among a stored at least one counterpart information (S430).

In this case, the at least one counterpart information is stored in the communication service management server 340, 350 and is then provided to the mobile terminal 100. Alternatively, the at least one counterpart information can be stored in the memory 160 of the mobile terminal 100. Specifically, in case of the 'Always ON' state, the mobile terminal 100 accesses the communication service management server and is then able to search, check and download all counterpart information stored in the accessed communication service management server at any time.

Moreover, the stored at least one counterpart information can include information on the IMS subscribed terminal or a user of the IMS subscribed terminal. For instance, if a phone number of the counterpart terminal corresponding to the counterpart priority information (or the counterpart terminal for which the counterpart priority information is set) is '010-111-1111' or its ID is 'happydays', the mobile terminal 100 is able to check the counterpart information for which the phone number '010-111-1111' is set or the counterpart information for which the ID 'happydays' is set. For the checked counterpart information, detailed information, such as a setup name, a nickname, a blog address or an email address, can be set as well as the phone number '010-111-1111' or the ID 'happydays'.

Under the control of the controller 180, the mobile terminal 100 displays the stored at least one counterpart information via the display unit 151 and also displays a communication service priority information setting for the checked counterpart information (S440).

The mobile terminal 100 is able to display a counterpart list including the stored at least one counterpart information. For instance, the counterpart list includes counterpart information corresponding to each of one or more IMS subscribed terminals. Each counterpart information includes detailed information on the corresponding terminal or its user, such as a phone number, an ID, a setup name, a nickname, a blog address or an email address.

Alternatively, the counterpart list contains at least one counterpart information. Specific detailed information (e.g., a setup name, a nickname, a phone number, etc.) among the detailed information included in the counterpart information can be displayed.

Moreover, when the displaying step (S440) in FIG. 4 is performed according to the execution of the phonebook related application, the mobile terminal 100 enables counterpart information on an IMS non-subscribed terminal to be included in the counterpart list as well as counterpart information on the IMS subscribed terminals. The counterpart information on the IMS non-subscribed terminal is directly input by a user or can be stored as counterpart information related to a transceived call/message in the memory 160, in association with a phonebook function, irrespective of the IMS based communication service.

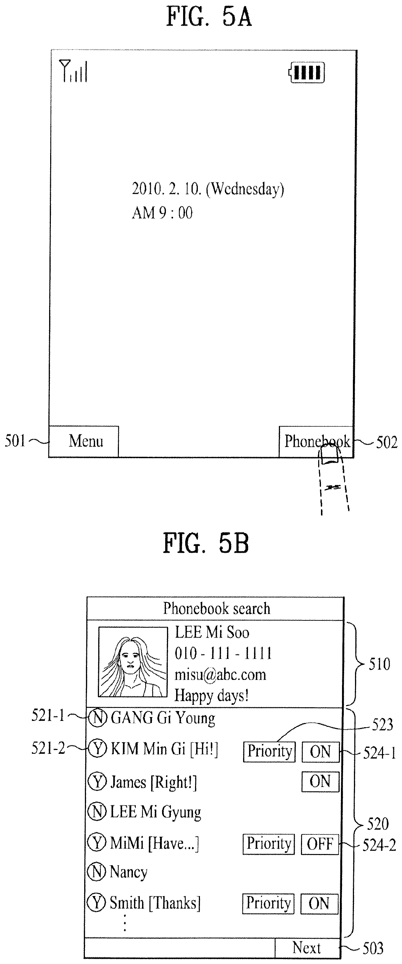

In the displaying step (S440) in FIG. 4, the mobile terminal 100 is able to identifiably display the counterpart information of the counterpart terminal for which the priority information setting was confirmed to exist, on the counterpart list. This is explained with reference to FIGS. 5A to 6B.

First of all, a case where a phonebook related application is executed as a counterpart information provision application is explained. FIGS. 5A to 6B are diagrams for displaying a counterpart list according to the present invention.

Referring to FIG. 5A, if a user selects a phonebook key region (Phonebook) 502 provided on a screen, the mobile terminal 100 receives an input of an execution command signal of a phonebook related application and is then able to execute the phonebook related application. Of course, if a phonebook related menu item or a phonebook related function key is selected, the mobile terminal 100 is able to receive an input of an execution command signal of a phonebook related application.

Referring to FIG. 5B, as the phonebook related application is executed, the mobile terminal 100 is able to display a phonebook search picture including a counterpart list constructed with a plurality of counterpart information.

In the phonebook search picture, a user region 510 for displaying user information of the mobile terminal 100 and a counterpart region 520 for displaying counterpart information are included. A counterpart list constructed with counterpart information can be displayed in the counterpart region 520. For instance, user information of the mobile terminal 100 such as a photo, a title (name), a phone number, a blog address, an email address and a nickname can be included in the user region 510.

In the counterpart list, both counterpart information corresponding to an IMS subscribed terminal (hereinafter, "IMS subscribed counterpart information") and counterpart information corresponding to an IMS non-subscribed terminal (hereinafter, "IMS non-subscribed counterpart information") can be included. The IMS subscribed counterpart information can identifiably display whether a priority information setting exists and can also indicate whether an IMS is currently activated.

For instance, if a terminal 100 is in a state of 'Always ON', the IMS can always be activated if power of the terminal is turned on. If a terminal 100 is able to execute an IMS via an IMS execution command signal, the terminal is able to activate the IMS only when an input of the IMS execution command signal is received.

For instance, when a presence or non-presence of IMS subscription is indicated, the IMS non-subscribed counterpart information can be marked with 'N' 521-1 and the IMS subscribed counterpart information can be marked with 'Y' 521-2. In displaying whether priority information is set, the counterpart information for which priority information has been set can be marked with 'Priority' 523 and the counterpart information for which the priority information is not set can be unidentified. In displaying a presence or non-presence of IMS activation, the counterpart information of an IMS activated terminal can be marked with 'ON' 524-1 and an IMS deactivated terminal can be marked with 'OFF' 524-2.

If a 'Next' icon 503 is selected by a user, the mobile terminal 100 is able to go to a next page of the phonebook search picture.

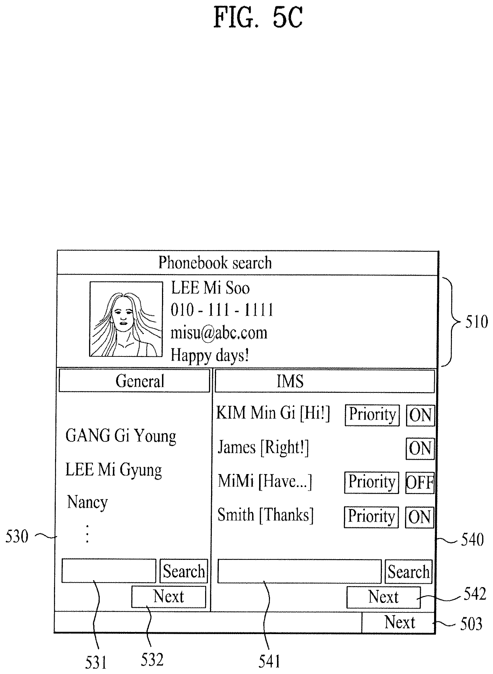

Referring to FIG. 5C, as the phonebook related application is executed, the mobile terminal 100 is able to display a search picture including a user region 510 and counterpart regions 530 and 540. In particular, the counterpart regions 530 and 540 can be divided into a region 530 for displaying IMS non-subscribed counterpart information (hereinafter, "non-subscribed counterpart region") and a region 540 for displaying IMS subscribed counterpart information (hereinafter, "subscribed counterpart region"). This is to facilitate a user to recognize a presence or non-presence of IMS subscription.

If a 'Next' icon 532 of the non-subscribed counterpart region 530 is selected by a user, the mobile terminal 100 goes from a current page of the non-subscribed counterpart region 530 to a next page. If a 'Next' icon 542 of the subscribed counterpart region 540 is selected by a user, the mobile terminal 100 goes from a current page of the subscribed counterpart region 540 to a next page.

Using a search window 531 provided on the non-subscribed counterpart region 530 and a search window 541 provided on the subscribed counterpart region 540, the mobile terminal 100 is able to receive input search information for searching the non-subscribed counterpart information and search information for searching the subscribed counterpart information.

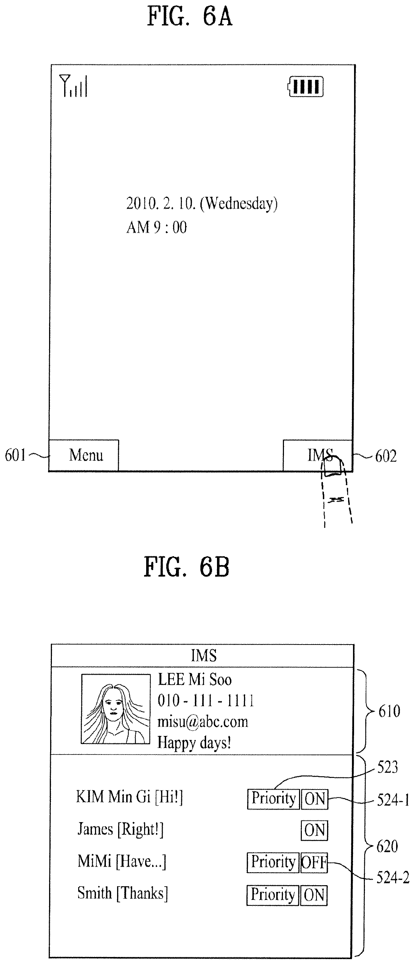

In the following description, a case where an IMS related application is executed as a counterpart information provision application is explained. Referring to FIG. 6A, if a user selects an IMS key icon (IMS) 602 provided on a screen, the mobile terminal 100 receives an input of an execution command signal for an IMS related application and is then able to execute the IMS related application. Of course, if an IMS related menu item or an IMS related function key is selected, the mobile terminal 100 is able to receive an input of an execution command signal of an IMS related application.

Occasionally, after the execution command signal for the IMS related application has been input, the mobile terminal 100 receives an input of an IMS subscription ID and an input of a password from a user. If the input IMS subscription ID and password are authenticated, the mobile terminal is able to execute the IMS related application.

Referring to FIG. 6B, as the IMS related application is executed, the mobile terminal 100 is able to display a counterpart list including at least one subscribed counterpart information on the screen. The counterpart list is displayed in a counterpart region 620, while the user information is displayed in a user region 610. In this case, the user and counterpart regions 610 and 620 can refer to the former user and the previously described counterpart regions 510 and 520.

For instance, in displaying whether priority information is set, the counterpart information for which the priority information has been set can be marked with 'Priority' 523 and the counterpart information for which the priority information is not set can be unidentified. In displaying a presence or non-presence of IMS activation, the counterpart information of an IMS activated terminal can be marked with 'ON' 524-1 and an IMS deactivated terminal can be marked with 'OFF' 524-2.

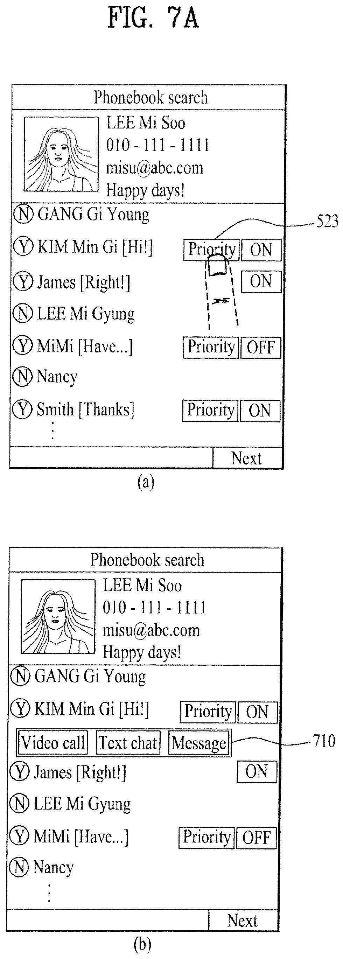

Referring now to the displaying step (S440) in FIG. 4, the mobile terminal 100 is able to display identification information of the communication service related to the priority information setting on the checked counterpart information under the control of the controller 180. For instance, the identification information can include at least one of a name, icon and image of the communication service for which the priority information is set. This is explained with reference to FIGS. 7A to 7D.

For clarity and convenience of the following description, assume that the phonebook search picture shown in FIG. 5B is displayed. FIGS. 7A to 7D are diagrams for displaying priority information settings on a counterpart list according to the present invention.

Referring to FIG. 7A, if a user selects 'Priority' 523 for the priority information setting for counterpart information 'KIM Min Gi' (FIG. 7A(a)), the mobile terminal 100 displays communication services for which priority information settings have been set(hereinafter, "priority communication services") 'Video call, Text chat, Message' 710 among the communication services available for 'KIM Min Gi' (FIG. 7A(b)).

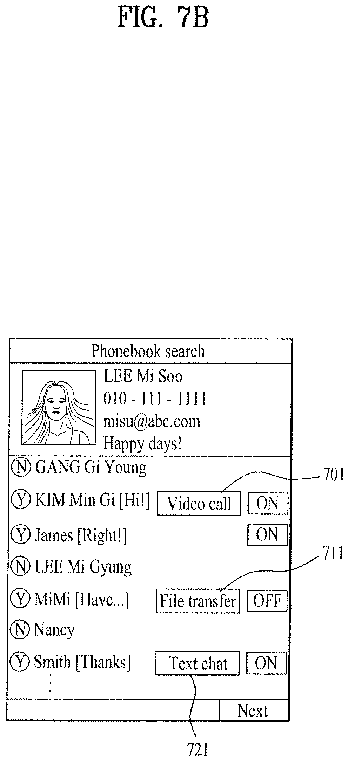

Referring to FIG. 7B, the mobile terminal 100 is able to display a specific priority communication service for each of the entire priority information set counterpart information on the counterpart list. For instance, the specific priority communication service can include one of a representative priority communication service, a priority communication service having a highest priority, a priority communication service having a highest frequency of use, a latest used priority communication service or a priority communication service selected by a user. For example, the specific priority information setting for counterpart information 'KIM Min Gi' can be 'Video call' 701, the specific priority information setting for counterpart information 'MiMl' can be 'File transfer' 711 and the specific priority information setting for counterpart information 'Smith' can be 'Text chat' 721.

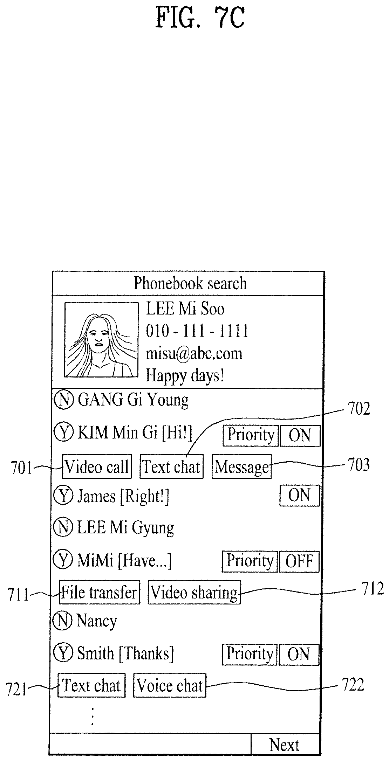

Referring to FIG. 7C, the mobile terminal is able to display all of the priority communication services set for each of the priority information settings on the counterpart list. For instance, the mobile terminal 100 displays that the priority communication services including 'Video call' 701, 'Text chat' 702 and 'Message' 703 are set for the counterpart information 'KIM Min Gi'. The mobile terminal 100 displays that the priority communication services including 'File transfer' 711 and 'Video sharing' 712 are set for the counterpart information 'MiMi'. The mobile terminal 100 displays that the priority communication services including 'Text chat' 721 and 'Voice chat' 722 are set for the counterpart information 'Smith'.

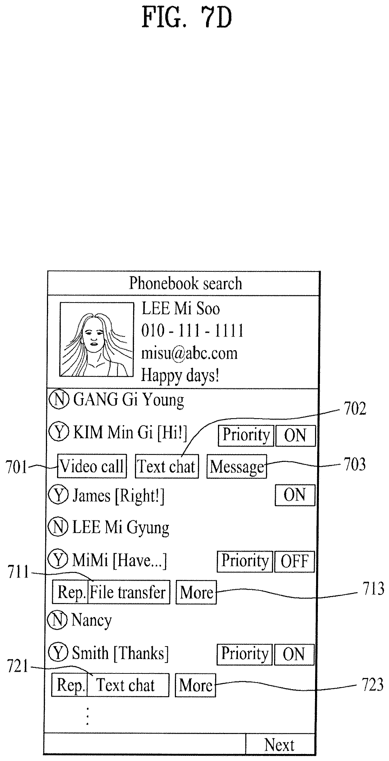

Referring to FIG. 7D, when a plurality of priority communication services belong to the same category, the mobile terminal 100 is able to display a representative priority communication service on the counterpart list. Mutually replaceable communication services among a plurality of the communication services can be regarded as belonging to the same category.

For instance, a text chat service, a voice chat service and video chat service belong to a chat category. A voice call service and a video call service belong to a call category. A message service and an email service belong to a message category. A file transfer service, an image sharing service and a video sharing service belong to a data transfer category.

As depicted in FIG. 7C, priority information for the counterpart information 'MiMi' is set for the file transfer service 711 and the video sharing service 712, which belong to the data transfer category. Referring again to FIG. 7D, if a representative service is designated to the file transfer service, the file transfer service 711, which is the representative service, can be identifiably displayed as the priority communication service set for 'MiMi' on the counterpart list.

As depicted in FIG. 7C, priority information the counterpart information 'Smith', is set for the text chat service 721 and the voice chat service 722, which belong to the chat category. Referring again to FIG. 7D, if a representative service is designated to the text chat service, the text chat service 721, which is the representative service, can be identifiably displayed as the priority communication service set for 'Smith' on the counterpart list. Moreover, if a more view region (More) 713/723 is selected for the counterpart information 'MiMi/Smith', multiple priority communication services set for the counterpart information 'MiMi/Smith' can be identifiably displayed.

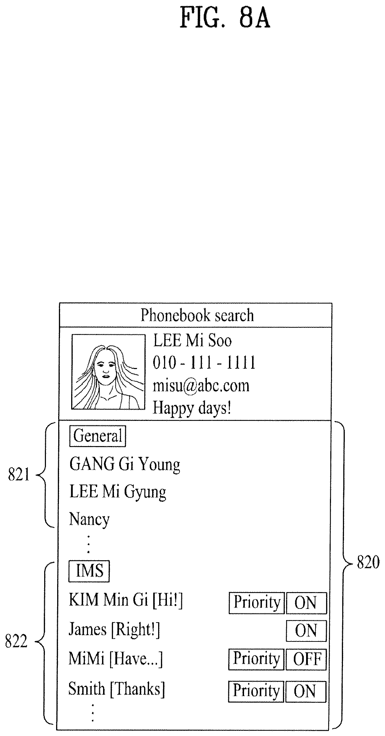

Referring again to FIG. 4, in the displaying step (S440), the mobile terminal 100 is able to display the counterpart list including at least one counterpart information by sorting the at least one counterpart information by classification condition. This is explained with reference to FIGS. 8A to 8C. For clarity and convenience of the following description, assume a case that a phonebook related application is executed.

FIGS. 8A to 8C are diagrams for sorting and displaying a counterpart list according to the present invention. Referring to FIG. 8A, the mobile terminal 100 sorts counterpart information with reference to a presence or non-presence of IMS subscription. Hence, the mobile terminal 100 displays a counterpart list including counterpart information of an IMS non-subscribed terminal on a first zone 821 within a counterpart region 820 and also displays a counterpart list including counterpart information of an IMS subscribed terminal on a second zone 822 within the counterpart region 820.

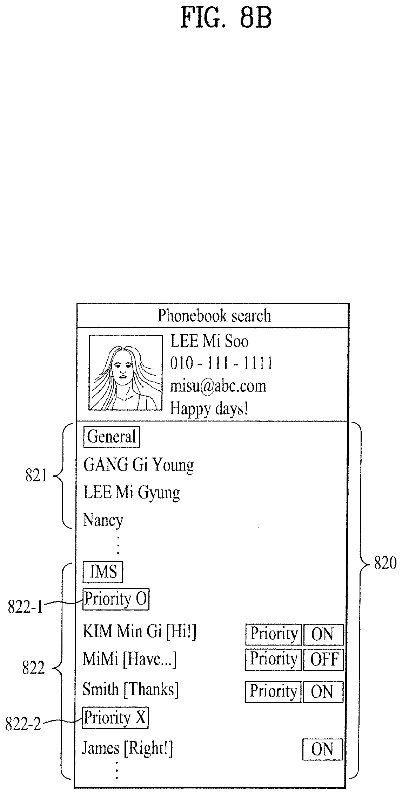

Referring to FIG. 8B, the mobile terminal 100 sorts counterpart information of an IMS subscribed terminal with reference to a presence or non-presence of priority information setting. Hence, the mobile terminal 100 displays a counterpart list including counterpart information for which priority information is set at zone 822-1 and also displays a counterpart list including counterpart information for which priority information is not set at zone 822-2.

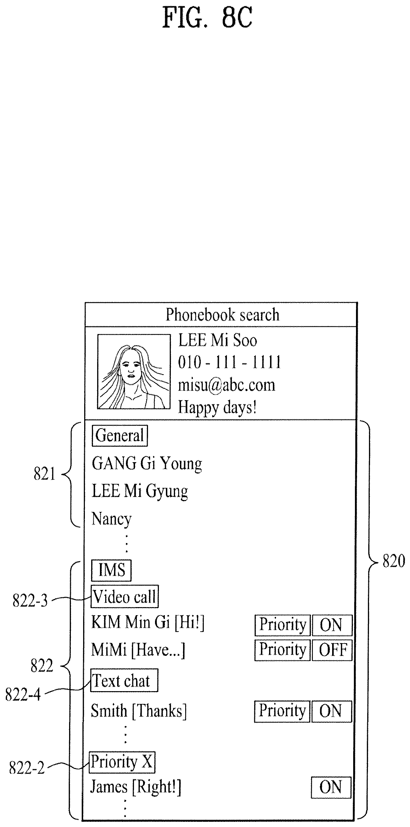

Referring to FIG. 8C, the mobile terminal 100 sorts priority information settings with reference to a communication service. Hence, the mobile terminal 100 displays a counterpart list including counterpart information in which priority information is set for a video call service at zone 822-3 and also displays a counterpart list including counterpart information in which priority information is set for a text chat service at zone 822-4.

Thus, the classification condition for sorting the counterpart information includes a presence or non-presence of IMS subscription, a presence or non-presence of priority information setting and/or a communication service. The classification condition for sorting the counterpart information can further include one of other various conditions (not shown in the drawings). Moreover, if a prescribed selection is made by a user, the mobile terminal 100 is able to display a counterpart list including counterpart information qualified for a specific condition (e.g., IMS subscription or non-subscription, IMS setting or non-setting, specific communication service, etc.).

Referring again to FIG. 4, the mobile terminal 100 can receive a selection of a specific one of the at least one counterpart information displayed in the displaying step (S440) via the user input unit 130 (S450).

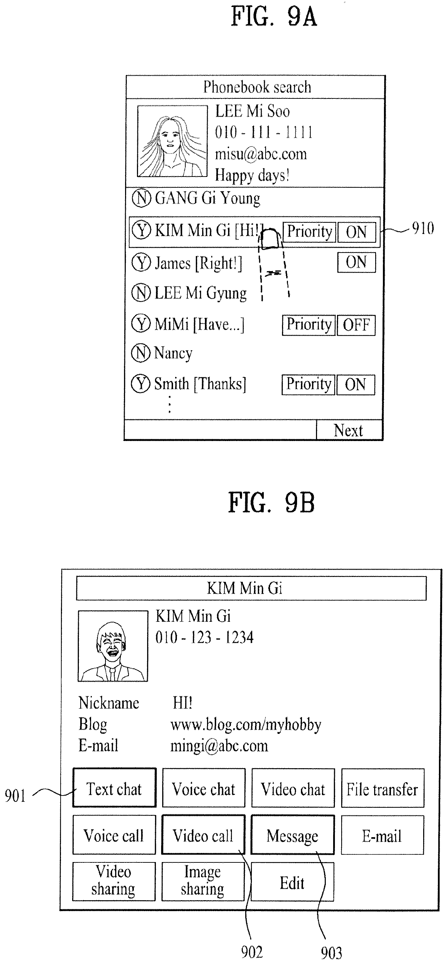

Under the control of the controller 180, the mobile terminal 100 displays at least one communication service executable on the selected specific counterpart information via the display unit 151 and is also able to identifiably display a priority communication service. This is explained in detail with reference to FIGS. 9A to 9E. For clarity and convenience of the following description, assume a case where a phonebook related application is executed.

FIGS. 9A to 9E are diagrams for displaying a communication service list relevant to specific counterpart information according to the present invention. Referring to FIG. 9A, the mobile terminal 100 enables a user to select a specific counterpart information, for which priority information 910 is set, from at least one counterpart information included in a counterpart list.

Referring to FIG. 9B, the mobile terminal 100 is able to display executable communication services while displaying detailed information (e.g., a photo, a name or a title, a phone number, a nickname, a blog address, an email address, etc.) on the selected specific counterpart information. In particular, priority communication services 901, 902 and 903 among the executable communication services can be identifiably displayed. For instance, in order to identifiably display the priority communication services, a boundary of a display zone (hereinafter, "priority display zone") of the priority communication services is represented in a deep color. Alternatively, a color of the priority display zone is differentiated. Alternatively, a size of the priority display zone is increased. Alternatively, the priority display zone can be arranged ahead of other display zones.

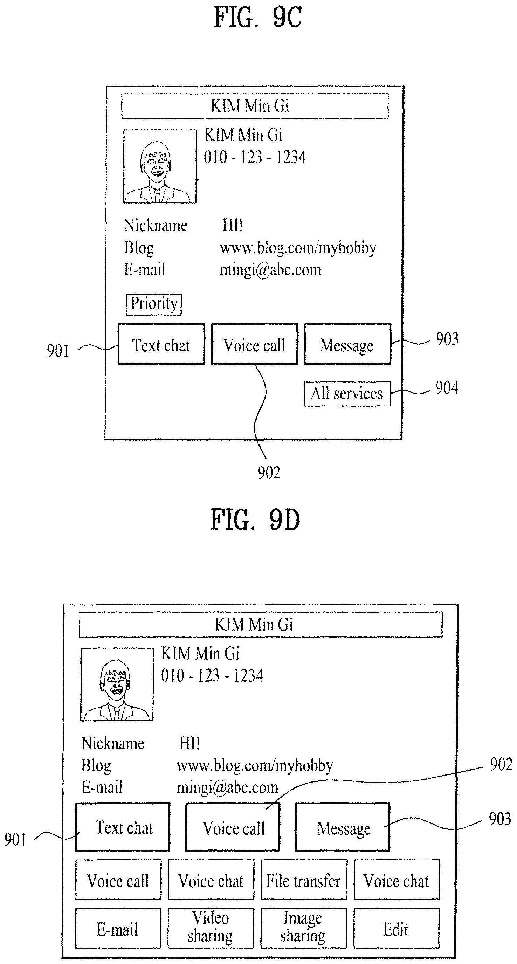

Referring to FIG. 9C, the mobile terminal 100 displays just the priority display zones 901, 902 and 903 on the screen. Only when an all services zone 904 is selected is the mobile terminal 100 able to display the rest of the display zones of the communication services.

Referring to FIG. 9D, the mobile terminal 100 enlarges the display of the priority display zones 901, 902 and 903 but reduces the display of the rest of the display zones.

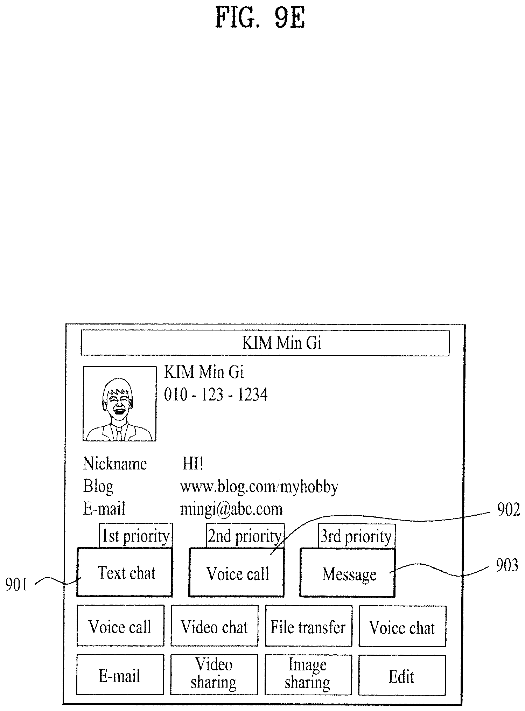

Referring to FIG. 9E, when differential priorities are set for a plurality of priority communication services, the mobile terminal 100 is able to display the set priorities (e.g., 1^{st} priority, 2^{nd} priority, 3^{rd} priority, etc.) together with identifiable displays of the priority communication services for a plurality of the priority communication services.

Referring again to FIG. 4, if the specific counterpart information is selected, the mobile terminal 100 determines whether to execute the priority communication service for the selected specific counterpart information under the control of the controller 180. The mobile terminal 100 is then able to execute the priority communication service according to the corresponding determination.

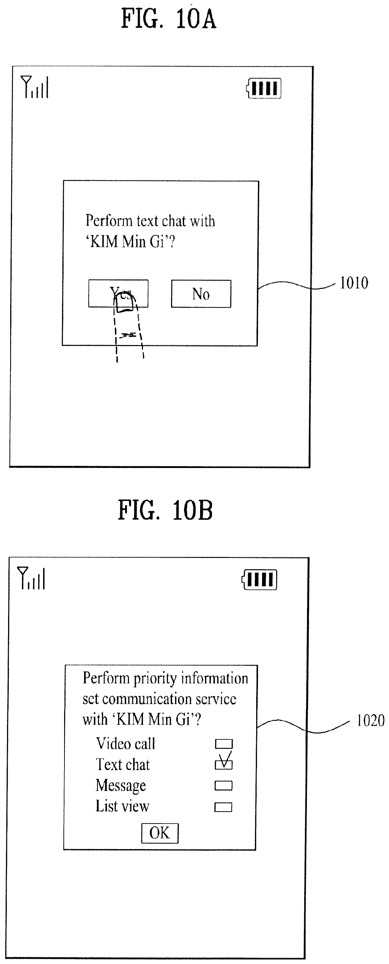

Meanwhile, if a result of the determination is to not execute the priority communication service, the mobile terminal 100 is able to display a plurality of communication services executable on the specific counterpart information, such as those displayed in FIGS. 9B, 9D and 9E. This is explained with reference to FIGS. 10A to 10C.

FIGS. 10A to 10C are diagrams for executing a communication service for which priority information on specific counterpart information is set according to the present invention.

Referring to FIG. 10A, if specific counterpart information is selected from a counterpart list, the mobile terminal 100 is able to display a window 1010 for querying whether to execute a text chat service that is a priority communication service of the selected specific counterpart information. If a plurality of priority communication services is set for the specific counterpart information, the mobile terminal 100 is able to query whether a specific one of the priority communication services will be executed, as previously explained.

Referring to FIG. 10B, if specific counterpart information is selected from a counterpart list, the mobile terminal 100 is able to display a window 1020 for displaying all priority communication services set for the selected specific counterpart information and then enables a user to select a communication service to execute.

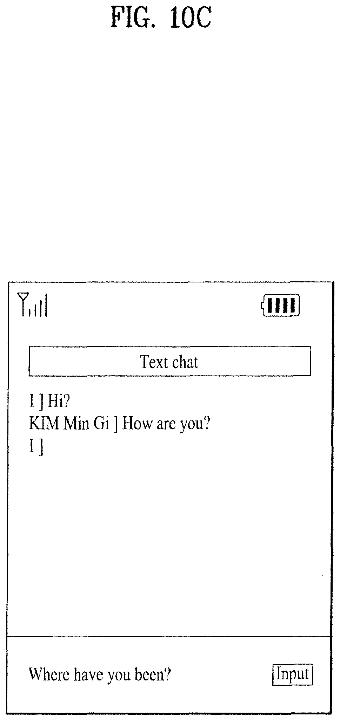

If execution (i.e., 'Yes') of a text chat service is selected in FIG. 10A or a text chat service is selected in FIG. 10B, the mobile terminal 100 executes the text chat service with a counterpart corresponding to specific counterpart information and displays text according to the execution of the text chat service, as shown in FIG. 10C. If a non-execution (i.e., 'No') of the text chat service is selected in FIG. 10A or a list view is selected in FIG. 10B, the mobile terminal 100 displays communication services executable on the specific counterpart information (FIGS. 9B, 9D and 9E).

According to the present invention, the mobile terminal 100 receives an input of search information for searching counterpart information via the user input unit 130 from a user and is then able to search for specific counterpart information corresponding to the input search information under the control of the controller 180. For instance, the search information can include at least one of numerals, characters or symbols that configure the counterpart information or detailed information on the counterpart information. In particular, the search information can include at least one of numerals configuring a phone number, characters configuring a title or name, characters configuring a nickname, or characters and/or numerals configuring an email address.

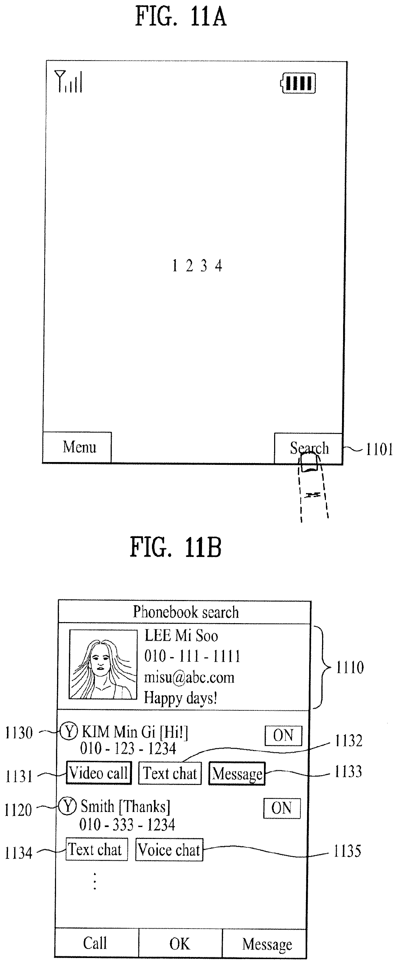

Under the control of the controller 180, the mobile terminal 100 displays the searched specific counterpart information and is also able to display a priority communication service set for the searched specific counterpart information. This is explained in detail with reference to FIGS. 11A and 11B. FIGS. 11A and 11B are diagrams for displaying a counterpart information list corresponding to search information according to the present invention.

Referring to FIG. 11A, after a series of numerals '1234' has been input as search information, if a search icon 1101 is activated, the mobile terminal 100 is able to search counterpart information including the input numerals. For instance, the mobile terminal 100 is able to search for the counterpart information in which the input numerals are included as a phone number. Of course, the counterpart information, in which the input numerals are included as a whole, part or portion of an email address, a blog address or a nickname can be searched.

Referring to FIG. 11B, the mobile terminal 100 displays counterpart information, in which the input numerals are included as phone numbers. The mobile terminal 100 is also able to display a priority communication service set for the counterpart information.

For instance, the mobile terminal 100 displays that 'Video call' 1131, 'Text chat' 1132 and 'Message' 1133 are set for the searched counterpart information 'KIM Min Gi'. The mobile terminal 100 displays that 'Text chat' 1134 and 'Voice chat' 1135 are set for the searched counterpart information 'Smith'. Moreover, when the input numerals are included in a phone number, the priority communication services that are executable using the phone number, e.g., the video call service 1131 and the message service 1133, can be identifiably displayed.

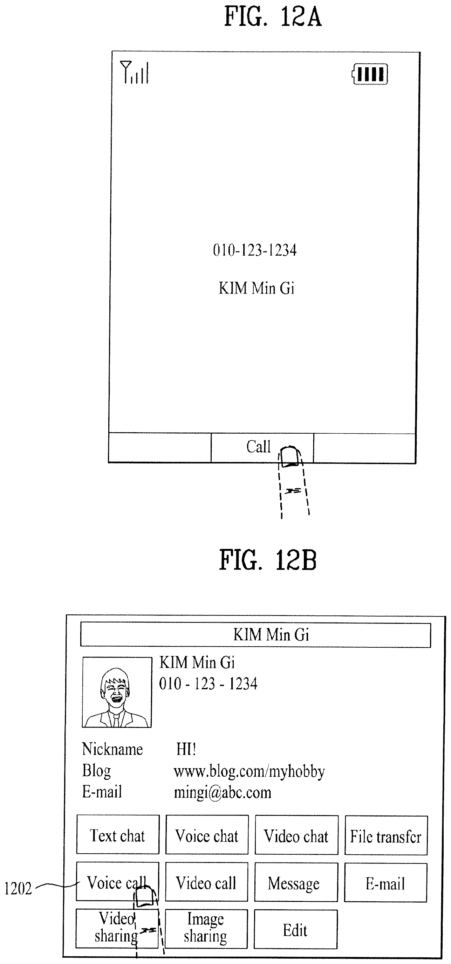

According to the present invention, when an input of an execution command signal of a communication service is received for which priority information is not set among a plurality of communication services belonging to a same category, the mobile terminal 100 is able to preferentially execute the priority communication service for which the priority information is set under the control of the controller 180. This is explained in detail with reference to FIGS. 12A to 12D. For clarity and convenience of the following description, assume a case where priority information is set for a video call service for a specific counterpart terminal among a plurality of communication services belonging to a call category.

FIGS. 12A to 12D are diagrams for executing a communication service for which priority information is set according to the present invention. Referring to FIG. 12A, the mobile terminal 100 receives an input of a phone number of a specific counterpart terminal from a user and is then able to enable the user to select a call key. Generally, if the call key is selected after completion of an input of a phone number, assume that a voice call service can be executed.

Referring to FIG. 12B, the mobile terminal 100 enables a user to select a voice call service 1202 from communication services executable on a specific counterpart terminal. Generally, if a voice call service is selected, assume that the voice call service can be executed.

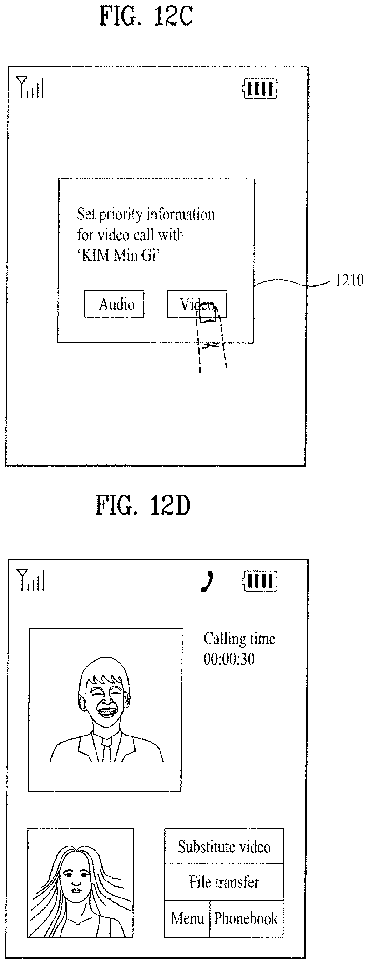

Referring to FIG. 12C, after a phone number has been input, if a call key selection (FIG. 12A) or a voice call service selection (FIG. 12B) is performed, the mobile terminal 100 does not execute a voice call service. Instead, the mobile terminal 100 displays a window 1210 for querying whether to execute a video call service for which priority information is set.

Referring to FIG. 12D, if an execution of the video call service or 'Video' is selected via the window 1210, the mobile terminal 100 is able to perform the video call service with a counterpart terminal corresponding to the input phone number. Of course, in case that an execution of the voice call service of 'Audio' is selected via the window 1210, the mobile terminal 100 is able to perform the audio call service with a counterpart terminal corresponding to the input phone number.

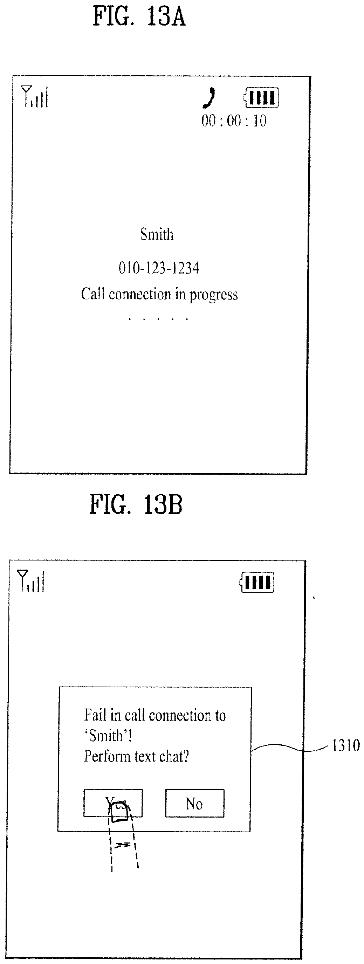

According to the present invention, if a call connection with a specific counterpart terminal fails, the mobile terminal 100 is able to lead a priority communication service, which is set for the specific counterpart terminal, to be executed under the control of the controller 180. This is explained in detail with reference to FIGS. 13A to 13C.

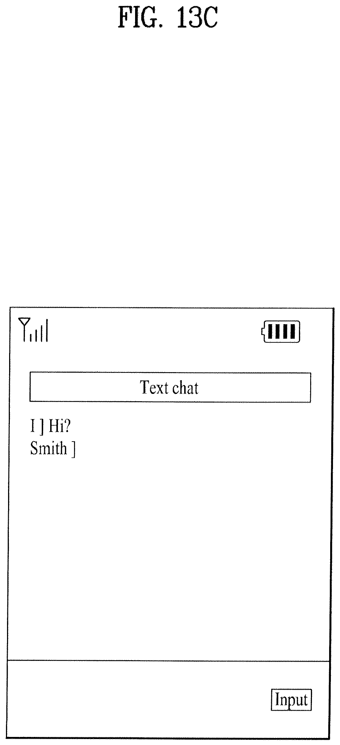

FIGS. 13A to 13C are diagrams for executing a communication service for which priority information is set when there is a call connection failure according to the present invention. First of all, the mobile terminal 100 attempts a voice call (or a video call) with a specific counterpart terminal (FIG. 13A). If the mobile terminal 100 fails in the voice call with the specific counterpart terminal, the mobile terminal 100 is able to display a window 1310 for querying whether to execute a text chat service that is a priority communication service set for the specific counterpart terminal (FIG. 13B). If a user selects 'Yes' at window 1310, then the mobile terminal 100 performs a text chat (FIG. 13C).

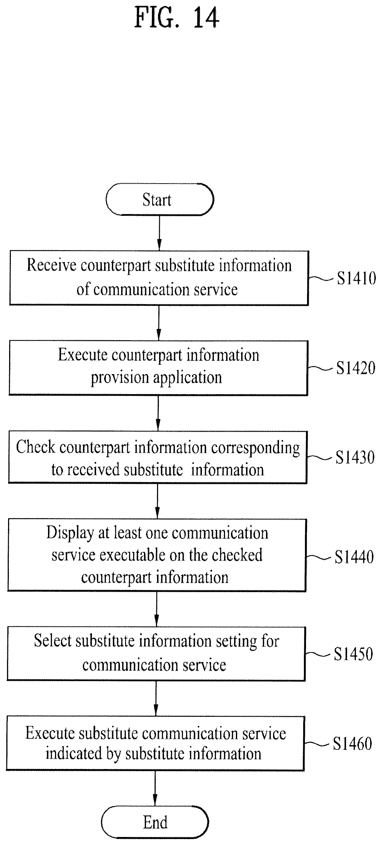

In the following description, a method of controlling a communication service using substitute information is explained with reference to FIGS. 14 to 17B.

FIG. 14 is a second flowchart for a communication service controlling method in a mobile terminal according to one embodiment of the present invention. Referring to FIG. 14, the mobile terminal 100 receives substitute information (hereinafter, "counterpart substitute information") of a communication service for a counterpart terminal via the wireless communication unit 110 (S1410). The counterpart substitute information can include information indicating that a different communication service is set to substitute for a prescribed communication service, which can be performed on other terminals by a counterpart terminal. A process for setting the substitute information will be explained in detail later.

FIG. 3E shows a data structure in which counterpart substitute information is included in status information of a counterpart terminal. For instance, the data shown in FIG. 3E can include a field 304-2 containing information (<Substitute>TextChat) indicating that a text chat service (TextChat) is set for a video call service (VideoCall) 304-1.

The substitute information receiving step (S1410) in FIG. 14 is similar or identical to the priority information receiving step (S410) in FIG. 4 explained previously and its details are omitted.

When an execution command signal of a counterpart information provision application is received from a user via the user input unit 130, the mobile terminal 100 performs the counterpart information provision application corresponding to the input execution command signal under the control of the controller 180 (S1420). The counterpart information provision application performing step (S1420) is similar or identical to the performing step (S420) in FIG. 4, explained previously, and its details are omitted.

The mobile terminal 100 checks counterpart information of a counterpart terminal corresponding to the received counterpart substitute information among the stored at least one counterpart information under the control of the controller 180 (S1430). For instance, when a phone number of the counterpart terminal corresponding to the counterpart substitute information, or the counterpart terminal for which the counterpart substitute information is set, is '010-111-1111' or its ID is 'happydays', the mobile terminal 100 is able to check the counterpart information for which the phone number '010-111-1111' is set or the counterpart information for which the ID 'happydays' is set. The counterpart information checking step (S1430) is similar or identical to the checking step (S430) in FIG. 4, explained previously, and its details are omitted.

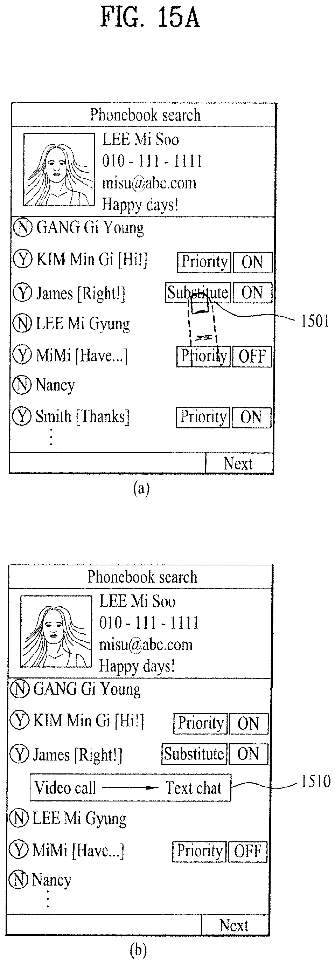

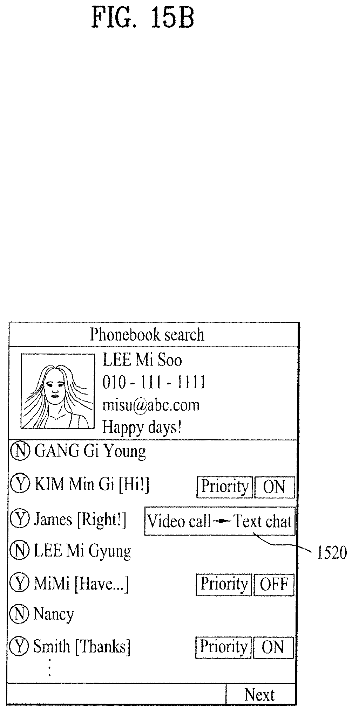

Regarding the counterpart terminal, of which substitute information is checked to determine if it exists on the counterpart list (S1430), the mobile terminal 100 identifiably displays the counterpart information or substitute information under the control of the controller 180. This is explained in detail with reference to FIG. 15A and FIG. 15B. For clarity and convenience of the following description, assume that a phonebook related application is executed.

FIG. 15A and FIG. 15B are diagrams for displaying substitute information settings for communication services in a counterpart list according to the present invention.

Referring to FIG. 15A(a), the mobile terminal 100 is able to identifiably display counterpart information, for which substitute information exists, on a counterpart list. For instance, the mobile terminal 100 is able to display an icon 'Substitute' 1501 indicating that the substitute information exists together with the counterpart information. The icon can be represented in one of various forms including text, an image and/or an icon. Alternatively, a font, a font size and/or a display color of the counterpart information, for which substitute information exists, can be represented differently.

Referring to FIG. 15A(b), if 'Substitute' 1501 is selected in FIG. 15A(a) by a user, the mobile terminal 100 is able to output the substitute information 1510 indicating that a second communication service (e.g., a text chat service) is substituted for a first communication service (e.g., a video call service).

Referring to FIG. 15B, when displaying the counterpart information for which substitute information exists on the counterpart list, the mobile terminal 100 is able to output the substitute information 1520 indicating that the second communication service is substituted for the first communication service as well.

Referring again to FIG. 14, the mobile terminal 100 displays at least one communication service executable on the specific checked counterpart information in the checking step (S1430) under the control of the controller 180 (S1440). Alternatively, when a user selects the specific counterpart information for which the substitute information for the specific communication service is set from the counterpart list, the mobile terminal 100 is able to display at least one communication service executable on the specific checked counterpart information.

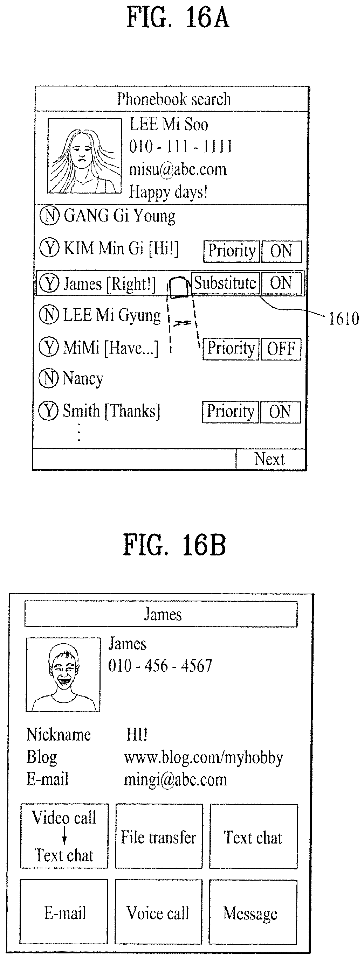

The mobile terminal 100 is able to identifiably display the communication service, for which the substitute information is set among the at least one communication service executable on the specific counterpart information under the control of the controller 180. This is explained in detail with reference to FIGS. 16A to 16E. For clarity and convenience of the following description, assume a case where a phonebook related application is executed.

FIGS. 16A to 16E are diagrams for displaying a communication service list relevant to specific counterpart information according to the present invention. Referring to FIG. 16A, the mobile terminal 100 enables a user to select specific counterpart information for which substitute information is set from at least one counterpart information included in a counterpart list.

Referring to FIG. 16B, the mobile terminal 100 is able to display communication services executable on the selected specific counterpart information while displaying detailed information on the selected specific counterpart information. In doing so, regarding the communication service for which the substitute information is set among the executable communication services, the mobile terminal 100 is able to display that a second communication service (e.g., a text chat service) is substituted for a first communication service (e.g., a video call service).

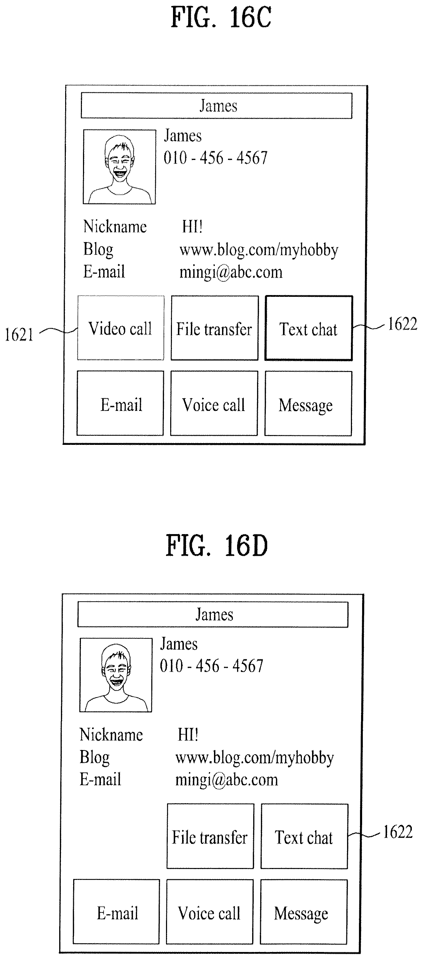

Referring to FIG. 16C, if the text chat service is substituted for the video call service, the mobile terminal 100 blurs a display zone 1621 of the video call service and deepens the color of a display zone 1622 of the text chat service. Moreover, a size of the display zone 1621 of the video call service may be reduced or a position of the display zone 1621 may moved further behind. On the contrary, a size of the display zone 1622 of the text chat service may be increased or a position of the display zone 1622 may be moved further ahead.

Referring to FIG. 16D, if the text chat service is substituted for the video call service, the mobile terminal 100 may not display a display zone of the video call service at all. The substitute information can be set in a user terminal (or a mobile terminal 100) as well as a counterpart terminal.

For instance, regarding the specific counterpart information or the entire counterpart information, the mobile terminal 100 is able to substitute the second communication service for the first communication service according to a user selection. This is performed if a current state of the mobile terminal 100 is not suitable for performing the first communication service.

In particular, when the mobile terminal 100 is currently located at a library, it is difficult to perform the video call service. Hence, according to a user selection, the text chat service can be substituted for the video call service for the entire counterpart information. Moreover, the mobile terminal 100 is able to display the substitute information set by the counterpart terminal and the substitute information set by the user terminal (i.e., the mobile terminal 100) by of discriminating the substitute information from each other.

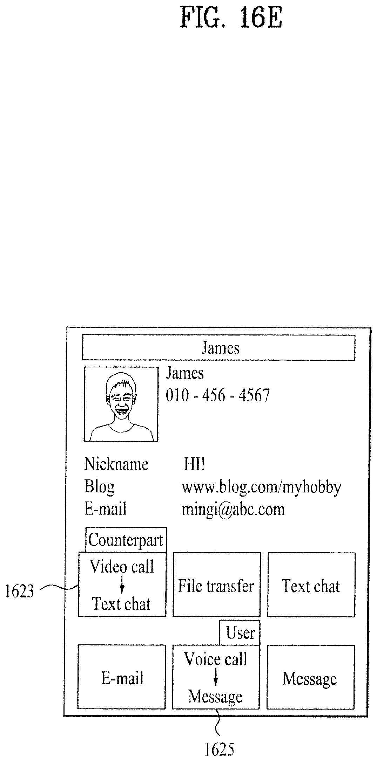

Referring to FIG. 16E, when displaying communication services of specific counterpart information, the mobile terminal 100 is able to identifiably display a communication service 1623, for which substitute information is set by a counterpart terminal using an indicator 'Counterpart', and a communication service 1625, for which substitute information is set by a user terminal, using an indicator "User'. For instance, each of the indicators can be represented using an icon, an image, a color or a shape.

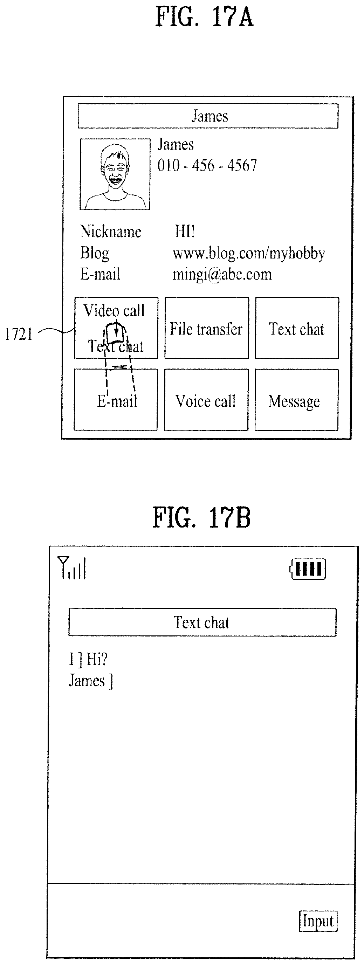

Referring again to FIG. 14, when a selection of a substitute information setting for a communication service is received from a user via the user input unit (S1450), the mobile terminal 100 is able to execute a substitute communication service setting indicated by the substitute information instead of the communication service for which priority information is set under the control of the controller 180 (S1460). This is explained in detail with reference to FIG. 17A and Fig. 17B.

FIGS. 17A and 17B are diagrams for executing a communication service indicated by substitute information for specific counterpart information according to the present invention.

Referring to FIG. 17A, when a display zone of a video call service having a substitute communication service set to a text chat service 1721 is selected, the mobile terminal 100 is able to receive an input of an execution command signal of the text chat service instead of the video call service.

Referring to FIG. 17B, the mobile terminal 100 is able to execute the text chat service with a specific counterpart terminal when an input of an execution command signal of the text chat service is received. Meanwhile, if the display zone of the video call service is selected in FIG. 17A, the mobile terminal 100 enables a user to select one of a video call service and a text chat service (not shown in the drawing).

According to the present invention, the mobile terminal 100 displays specific counterpart information corresponding to search information input by a user. The mobile terminal 100 is also able to display substitute information set for the searched specific counterpart information under the control of the controller 180.

According to the present invention, when an input of an execution command signal of a communication service for which substitute information is set among a plurality of communication services belonging to a same category is received, the mobile terminal 100 is able to preferentially execute the communication service indicated by the substitute information under the control of the controller 180. For instance, when a video call service is substituted for a voice call service among communication services belonging to a call category, if a user selects a call key after inputting a phone number, the mobile terminal 100 does not execute a general voice call service but is able to execute a video call service indicated by the substitute information.

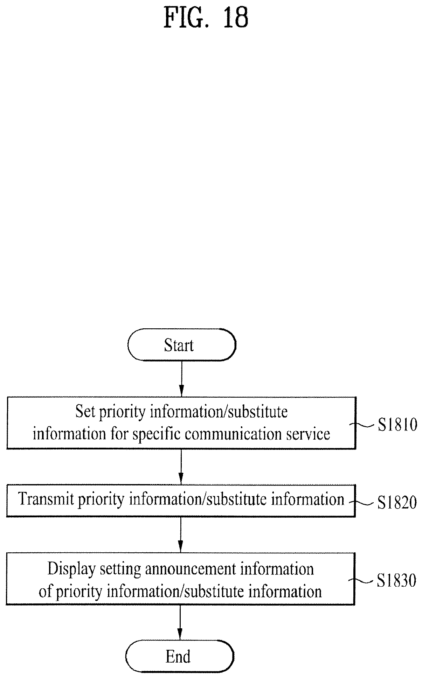

A method for setting priority information and substitute information is explained with reference to FIGS. 18 to 24. Although the following description teaches that a process for setting priority information and substitute information is performed by the mobile terminal 100, it is understood that the corresponding process can be performed by a counterpart terminal (i.e., an entity for setting the priority information or substitute information to transmit to the mobile terminal 100).

FIG. 18 is a third flowchart for a communication service controlling method in a mobile terminal according to one embodiment of the present invention. Referring to FIG. 18, the mobile terminal 100 receives an input to set at least one of priority information or substitute information on a specific communication service executable with IMS subscribed terminals from a user via the user input unit 130. The mobile terminal 100 then sets at least one of the priority information and the substitute information on the specific communication service to correspond to the received input under the control of the controller 180 (S1810).

In the setting step (S1810), the mobile terminal 100 is able to set priority information or substitute information for at least one communication service. In particular, if priority information is set for a plurality of communication services, the mobile terminal 100 is able to set the same priority of the plurality of the communication services or differential priorities for each of the plurality of the communication services.

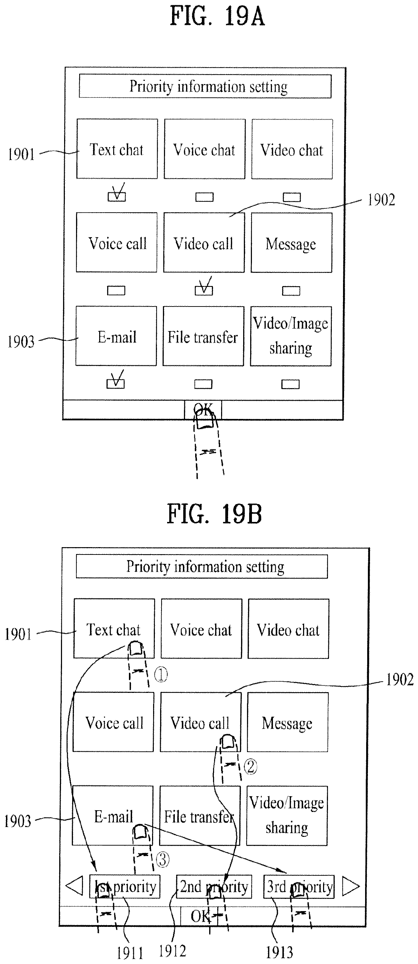

The setting of the priority information is explained in detail with reference to FIGS. 19A to 19D. FIGS. 19A to 19D are diagrams for setting priority information per service according to the present invention.

Referring to FIG. 19A, when a command signal to set priority information is received from a user, the mobile terminal 100 is able to display a communication service list. For instance, the mobile terminal 100 is able to receive the command signal to set the priority information if a menu item, a key region or a key corresponding to the setting of the priority information is selected. For instance, the communication service list can include communication services executable with IMS subscribed terminals.

After the text chat service 1901, the video call service 1902 and the email service 1903 have been selected from the communication service list shown in FIG. 19A, if an 'OK' key is selected, the mobile terminal is able to set priority information on each of the text chat service, the video call service and the email service.

Referring to FIG. 19B, when priority information on a plurality of communication services is set, the mobile terminal 100 is able to set different priorities for each of the plurality of communication services. For instance, the mobile terminal 100 is able to set the text chat service to a first priority, the video call service to a second priority and the email service to a third priority among a plurality of communication services.

In FIG. 19B, when an input of a touch & drag action to a first priority icon 1911 from the text chat service 1901 is received, an input of a touch & drag action to a second priority icon 1912 from the video call service 1902 is received, and an input of a touch & drag action to a third priority icon 1913 from the email service 1903 is received, the mobile terminal 100 is able to set the text chat service to a first priority, the video call service to a second priority and the email service to a third priority in order.

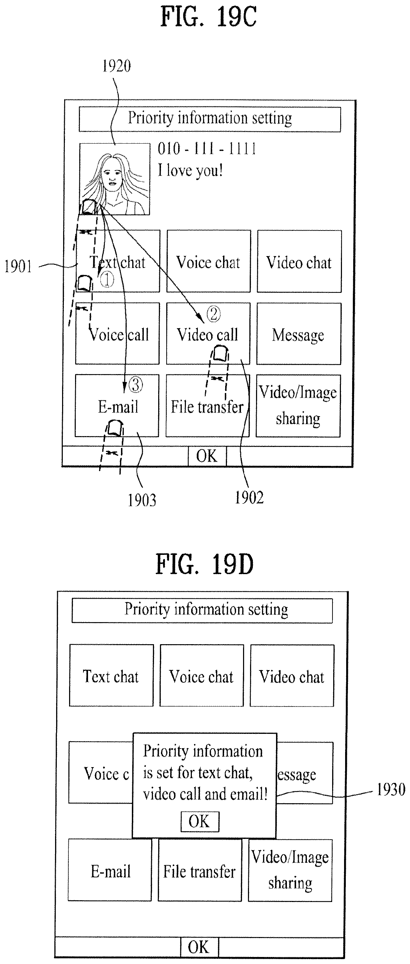

Referring to FIG. 19C, the mobile terminal 100 displays user information on one region of the screen. The mobile terminal 100 is also able to display a communication service list on the other region of the screen. When a touch & drag action from a photo 1920 in the user information region to each of the text chat service 1901, the video call service 1902 and the email service 1903 is received, the mobile terminal 100 is able to set priority information on each of the text chat service, the video call service and the email service.

Referring to FIG. 19D, after completion of the setting of the priority information, the mobile terminal 100 is able to display a window 1930 for announcing that the priority information has been set for a specific communication service.

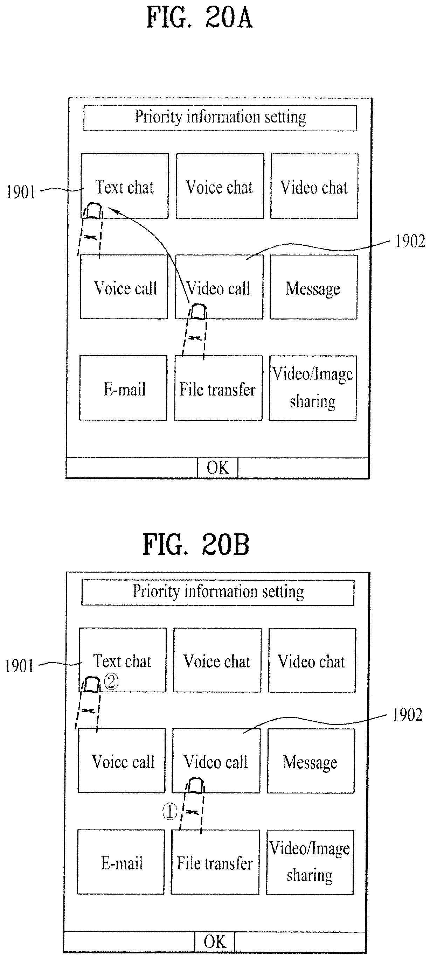

The setting of the substitute information is explained in detail with reference to FIGS. 20A to 20C. FIGS. 20A to 20C are diagrams for setting substitute information per communication service according to the present invention.

Referring to FIG. 20A or FIG. 20B, when a command signal to set substitute information is received from a user, the mobile terminal 100 is able to display a communication service list. For instance, when a menu item, a key region or a key corresponding to setting of the substitute information is selected, the command signal to set the substitute information can be input.

When an input of a touch & drag action to the text chat service 1901 from the video call service 1902 (or from the text chat service 1901 to the video call service 1902) is received in FIG. 20A, the mobile terminal 100 is able to set a substitute communication service for the video call service to the text chat service (or for the text chat service 1901 to the video call service 1902). After the video call service 1902 has been selected, if the text chat service 1901 is selected (or, after the text chat service 1901 has been selected, if the video call service 1902 is selected) in FIG. 20B, the mobile terminal 100 is able to set a substitute communication service for the video call service 1902 to the text chat service 1901 (or for the text chat service 1901 to the video call service 1902).

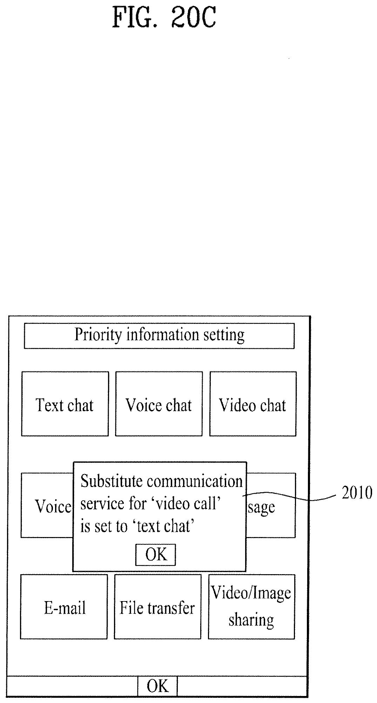

Referring to FIG. 20C, after completion of setting the substitute information, the mobile terminal 100 is able to display a window 2010 for announcing that the substitute information is set for a specific communication service.

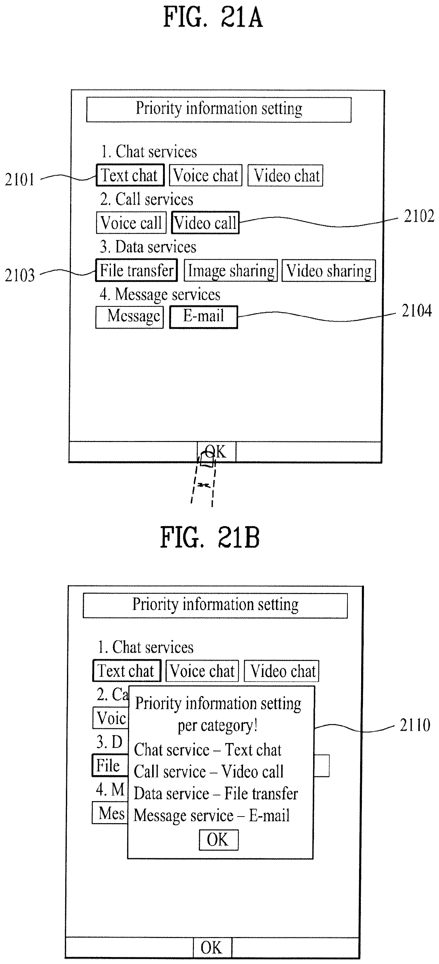

Referring again to FIG. 18, in the setting step (S1810), the mobile terminal 100 is able to set priority information for one of a plurality of communication services belonging to a same category. Moreover, when a plurality of categories exists, the mobile terminal 100 is able to set a priority communication service per category. This is explained in detail with reference to FIGS. 21A and 21B. FIGS. 21A and 21B are diagrams for discriminatively displaying a priority information setting per category according to the present invention.

Referring to FIG. 21A, when a command signal to set priority information is received, the mobile terminal 100 sorts communications services per category and is then able to display the sorted communication services. For instance, chat services can include a text chat service, a voice chat service and/or a video chat service. Call services can include a voice call service and/or a video call service. Data services can include a file transfer service, an image sharing service and/or a video sharing service. Message services can include a message service and/or an email service.

In FIG. 21A, when a user selects a communication service, for which priority information shall be set, from the communication services displayed per category, the selected communication service can be identifiably displayed on the communication list. For instance, 'Text chat' 2101 in the chat services is designated to a priority communication service, 'Video call' 2102 in the call services is designated to a priority communication service, 'File transfer' 2103 in the data services is designated to a priority communication service and 'E-mail' 2104 in the Message services is designated to a priority communication service.

Referring to FIG. 21B, after completion of setting the priority information per category, the mobile terminal 100 is able to display a window 2110 for announcing that priority information is set for a specific communication service per category.

Referring again to FIG. 18, in the setting step (S1810), the mobile terminal 100 is able to set a valid condition for priority information or substitute information that will be set to at least one of a specific time zone, a specific place, a specific counterpart information and a specific group. Therefore, when a counterpart terminal receives the priority information or substitute information set by the mobile terminal 100, the counterpart terminal is then able to apply the received priority or substitute information to a communication service with the mobile terminal 100 only if the valid condition is met.

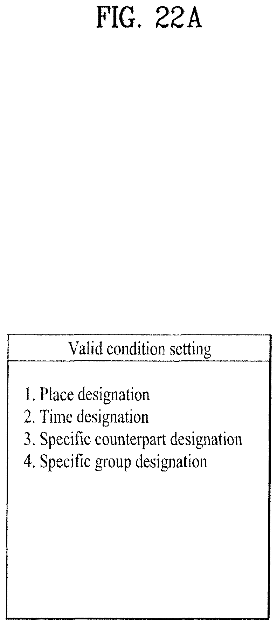

The valid condition setting process is explained in detail with reference to FIGS. 22A to 22E. FIGS. 22A to 22E are diagrams for setting a valid condition for priority/substitute information according to the present invention. For clarity and convenience, the following description is limited to the valid condition for the priority information. However, the present invention is not limited in this way.

Referring to FIG. 22A, when a command signal to set a valid condition is received, the mobile terminal is able to display a valid condition list. For instance, the valid condition list can include a place designation, a time designation, a specific counterpart designation and a specific group designation.

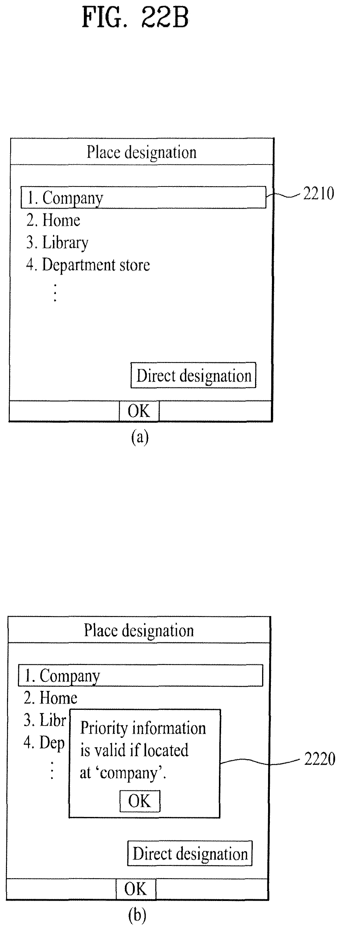

As illustrated in FIGS. 22B(a) and 22B(b), when the place designation is selected in FIG. 22A, the mobile terminal 100 displays a place list and a user is then able to set valid priority information for a specific place selected from places included in the place designation list. For instance, places previously designated by a user, address information or a place received from a counterpart terminal, address information stored in the memory 160 or places corresponding to the address information stored in the memory 160 can be included in the place designation list.

Moreover, if a specific place is set to 'Company' 2210 and priority information is set for a text chat service, a counterpart terminal receives the priority information from the mobile terminal 100 and is then able to apply the priority information to the text chat service only if located at the company. Namely, the counterpart terminal does not apply the priority information to the text chat service if located at a place other than the company. Meanwhile, if a 'Direct designation' icon is activated, the mobile terminal 100 directly receives an input of address information from a user and is then able to validly set the priority information for the input address information.

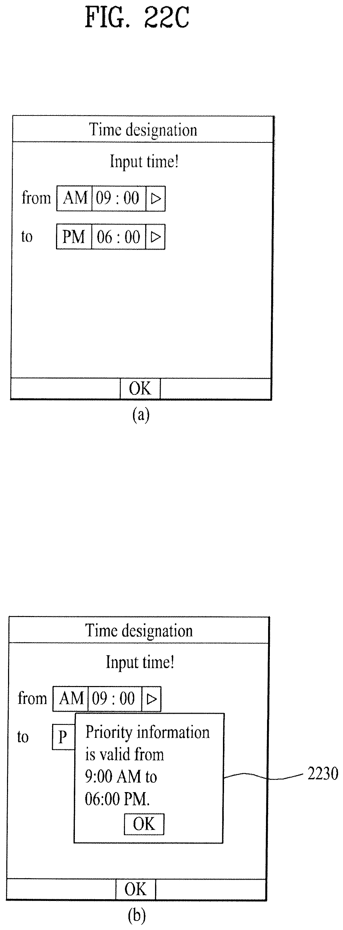

As illustrated in FIGS. 22C(a) and 22C(b), if 'Time designation' is selected in FIG. 22A, the mobile terminal 100 displays a time input window and is then able to set the valid priority information for a time input via the time input window. For instance, if a specific time is set to '9:00 AM to 6:00 PM' and priority information is set for a text chat service, a counterpart terminal receives the priority information from the mobile terminal 100 and is then able to apply the priority information to the text chat service during a time between 9:00 AM and 6:00 PM only. In particular, the counterpart terminal does not apply the priority information to the text chat service except during the time 9:00 AM to 6:00 PM.

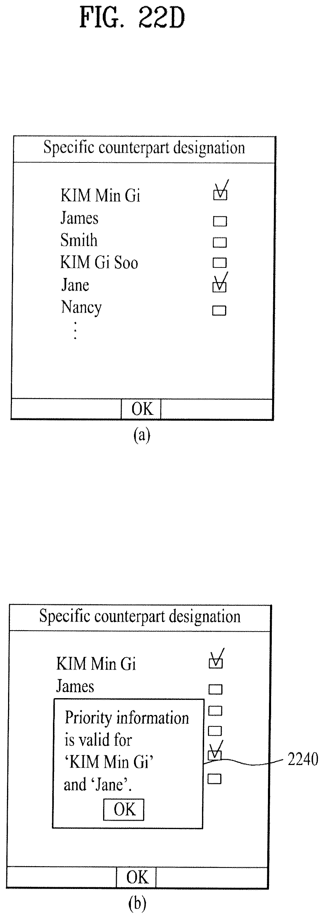

As illustrated in FIGS. 22D(a) and 22D(b), if 'Specific counterpart designation' is selected in FIG. 22A, the mobile terminal 100 displays a counterpart list including counterpart information of IMS subscribed terminals and is then able to set valid priority information for specific counterpart information selected from the counterpart list. Therefore, the above-set priority information can become valid for only the terminal corresponding to the specific counterpart information.

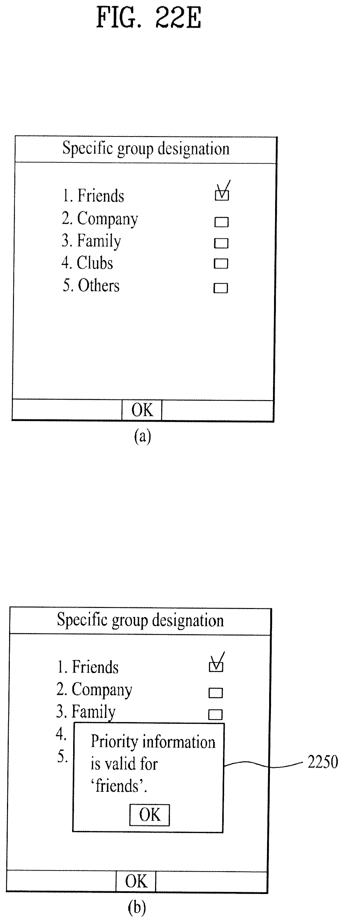

As illustrated in FIGS. 22E(a) and 22E(b), if 'Specific group designation' is selected in FIG. 22A, the mobile terminal 100 displays a group list including groups to which counterpart information of IMS subscribed terminals belong. The mobile terminal 100 is then able to set valid priority information for specific counterpart information belonging to a specific group selected from the group list.

Therefore, the above-set priority information can become valid only for the terminal corresponding to the specific counterpart information belonging to the specific group.

Referring again to FIG. 18, under the control of the controller 180, the mobile terminal 100 transmits the priority information or the substitute information set in the setting step (S1810) to the communication service management server or the IMS subscribed terminal via the wireless communication unit 110 (S1820). The communication service management server is able to transmit the received priority or substitute information to the IMS subscribed terminal.

When a valid condition for the priority information or the substitute information is set in the setting step (S1810), the set valid condition can be transmitted together with the priority or substitute information (S1820). Therefore, the IMS subscribed terminal receives the priority information or the substitute information and the valid condition set for the corresponding information. The IMS subscribed terminal is able to apply the priority or substitute information to the mobile terminal 100 only if a situation corresponds to the valid condition.

The mobile terminal 100 displays setting announcement information of the priority or substitute information set in the setting step (S1810) via the display unit 151 under the control of the controller 180 (S1830). This enables a user to be aware what kind of priority or substitute information is set for a user's terminal.

The displaying step (S1830) is performed in a standby mode (or a background image display mode) or can be performed in a driven state of a specific application. The displaying step (S1830) can be executed at a user requested point or a point set by a user. Alternatively, the displaying step (S1830) can be executed according to periodicity set by a user. Of course, the display point and periodicity can be arbitrarily determined by the controller 180.

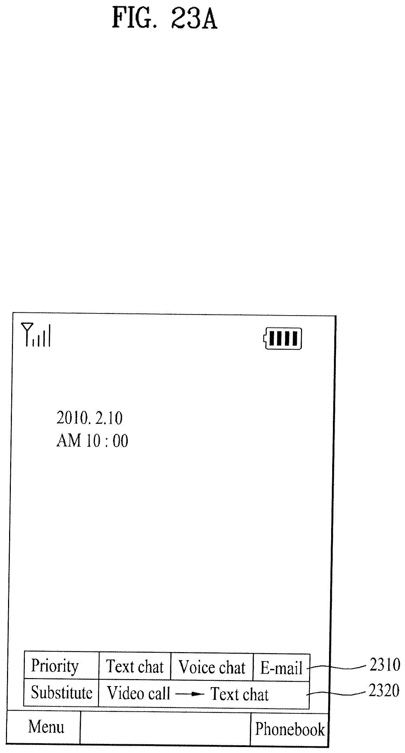

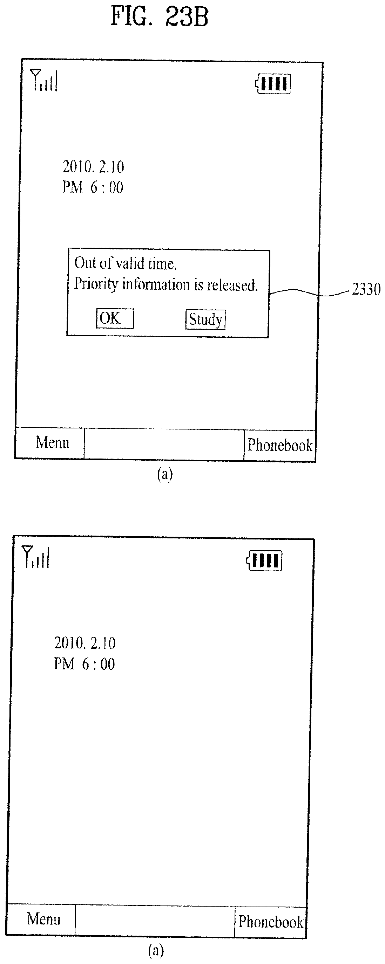

The step of displaying the setting announcement information (S1830) is explained in detail with reference to FIGS. 23A and 23B. FIGS. 23A and 23B are diagrams for displaying announcement information of priority/substitute information settings for communication services according to the present invention.

Referring to FIG. 23A, the mobile terminal 100 is able to display setting announcement information 2310 of priority information set by itself and setting announcement information 2320 of substitute information on one region of a screen in a standby mode. For instance, the setting announcement information of the priority information can include a name, an icon and/or image of a communication service for which the priority information is set. The setting announcement information of the substitute information can include information indicating what kind of communication service is set to be substituted for a specific communication service.

Referring to FIG. 23B(a), when a valid condition for the priority information and the substitute information is set to a time between 9:00 AM and 6:00 PM, the mobile terminal 100 displays announcement information 2330 at 6:00 PM indicating that the priority information and the substitute information are released. As illustrated in FIG. 23B(b), the mobile terminal 100 is able to stop displaying the setting announcement information of the priority information and the setting announcement information of the substitute information after 6:00 PM.

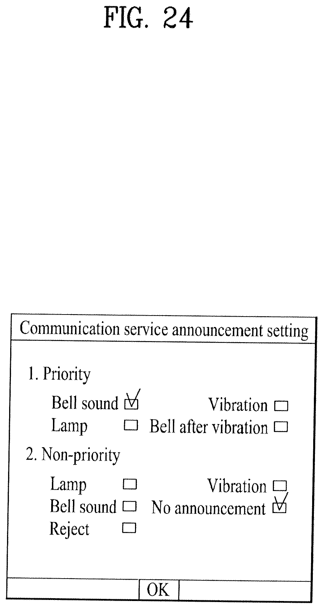

Referring to FIG. 24, the mobile terminal 100 is able to set a communication service indicating method according to a presence or non-presence of the priority information setting in the setting step (S1810) of FIG. 18.

When a request signal for a specific communication service is received from an IMS subscribed terminal, the mobile terminal 100 is able to perform a communication service request indicating operation. In doing so, the mobile terminal 100 is able to perform the request indicating operation by an announcing method set for the specific communication service.

FIG. 24 is a diagram for setting a communication service announcing method in accordance with a presence or non-presence of a priority setting according to the present invention. Referring to FIG. 24, the mobile terminal 100 sets an announcing method of a communication service for which priority information is set to 'Bell sound' and is able to set an announcing method of a non-priority communication service to 'No announcement'.

According to the present invention, when a request for counterpart information (i.e., a second counterpart information) of a second IMS subscribed terminal is received from a first IMS subscribed terminal, the mobile terminal 100 is able to transmit the second counterpart information to the first IMS subscribed terminal. The mobile terminal 100 is able to assume that the first and second IMS subscribed terminals are not subscribed to mutually perform an IMS based communication service in-between.

The mobile terminal 100 transmits an announcement signal to the second IMS subscribed terminal for announcing the second counterpart information requested from the first subscribed terminal. When a grant signal from the second IMS subscribed terminal is received, the mobile terminal 100 is able to transmit the second counterpart information to the first IMS subscribed terminal.

Moreover, the first IMS subscribed terminal may transmit a request signal to the second IMS subscribed terminal using the second counterpart information for requesting to mutually perform the IMS based communication service. In doing so, a signal transceiving operation between the first and second IMS subscribed terminals and the mobile terminal 100 can be performed using a communication service management server as a medium.

According to the present invention, the mobile terminal 100 and a prescribed communication device (e.g., a personal computer (PC)) can subscribe to the communication service management server using one identification information (e.g., a phone number). When a request signal for a specific communication service is received from an IMS subscribed terminal, the communication service management server is able to transmit information indicating that the specific communication service was requested by the IMS subscribed terminal to both the mobile terminal 100 and the prescribed communication device.

Moreover, when the mobile terminal 100 or the prescribed communication device is set as a priority device, the communication service management server is able to receive a request signal for a specific communication service from the IMS subscribed terminal. The communication service management server transmits information indicating that the specific communication service was requested by the IMS subscribed terminal to only the device set as the priority device, thereby enabling the specific communication service to be performed only by the device set as the priority device. Although each of the mobile terminal 100 and the prescribed communication device can receive the information indicating that the specific communication service was requested by the IMS subscribed terminal from the communication service management server, only the device set as the priority device performs the specific communication and the other device may not display announcement information on the request for the specific communication service.

According to one embodiment of the present invention, the above-described communication service controlling methods can be implemented in a program recorded medium as computer-readable codes. The computer-readable media includes all kinds of recording devices in which data readable by a computer system are stored. The computer-readable media includes ROM, RAM, CD-ROM, magnetic tapes, floppy discs and/or optical data storage devices, for example, and also includes carrier-wave type implementations (e.g., transmission via Internet).

Accordingly, the present invention provides the following effects and/or advantages.

First of all, according to at least one embodiment of the present invention, counterpart information of a counterpart terminal having subscribed to mutually perform an instant messaging service can always be provided if terminal power is turned on.

Secondly, the present invention can provide counterpart information of a counterpart terminal having subscribed to mutually perform an instant messaging service via a phonebook related application.

Thirdly, the present invention displays a specific communication service for which priority or substitute information is set by a counterpart terminal, whereby a communication service having priority information set by a counterpart terminal is executed prior to other communication services or whereby a communication service indicated by substitute information is executed in place of a communication service for which the substitute information is set.

It will be apparent to those skilled in the art that various modifications and variations can be made to the present invention without departing from the scope of the invention. Thus, it is intended that the present invention covers the modifications and variations of the invention provided they come within the scope of the appended claims and their equivalents.

## Claims

1. A mobile terminal (100) comprising:
a user input unit (130);
a wireless communication unit (110) configured for receiving a priority information setting related to a first communication service for a counterpart terminal and substitute information setting including substitute information indicating that a second communication service is set to substitute for the first communication service, which can be performed on other terminals by the counterpart terminal;
a memory (160) configured for storing the received priority information setting and for storing counterpart information of the counterpart terminal to communicate with the counterpart terminal;
a controller (180) configured for executing a provision application related to the first communication service for the counterpart terminal, and for determining the received priority information setting; and
a display unit (151) configured for displaying the received priority information setting under control of the controller;
wherein the controller is further configured for checking the memory for the counterpart information of the counterpart terminal corresponding to the received substitute information, for causing the display unit to display the counterpart information, a first item indicating the first communication service and a second item indicating the second communication service, and for causing the display unit to display, in the first item, a text indicating that the second communication service of the counterpart terminal is substituted for the first communication service.

2. The mobile terminal of claim 1, wherein the first communication service comprises at least a text chat service, a voice chat service, a video chat service, a message service, an email service, a video call service, a file transfer service, an image sharing service or a video sharing service.

3. The mobile terminal of any of claims 1 and 2, wherein the display unit is further configured for displaying a list including the stored counterpart information and identification information of the first communication service related to the priority information setting.

4. The mobile terminal of claim 3, wherein the identification information includes at least a name, an icon or an image of the first communication service related to the priority information setting.

5. The mobile terminal of any of claims 1-4, wherein:
the second communication service is different from the first communication service related to the priority information setting, and
the controller is further configured for performing the second communication service related to the substitute information setting instead of the first communication service related to the priority information setting.

6. The mobile terminal of any of claims 1-5, wherein:
the provision application is an instant messaging service, further referred to as IMS ; and
the wireless communication unit is further configured for subscribing to perform an IMS based communication service with the counterpart terminal.

7. The mobile terminal of any of claims 1-6, wherein:
the user input unit is further configured for enabling selection of at least one of the priority information setting and the substitute information setting for the first communication service, and
the wireless communication unit is further configured for transmitting the selected at least one of the priority information setting and the substitute information.

8. The mobile terminal of claim 7, wherein the user input unit is further configured for enabling selection of at least a specific time zone or a specific place as a valid condition for selecting the priority information setting or the substitute information setting.

9. The mobile terminal of any of claims 1-8, wherein:
the user input unit is further configured for enabling input of search criteria for searching the counterpart information,
the controller is further configured for searching the counterpart information for specific information corresponding to the input search criteria, and
the display unit is further configured for displaying the first communication service related to the priority information setting for the searched specific information.

10. The mobile terminal of any of claims 1-9, wherein:
the wireless communication unit is further configured for transmitting a call request signal to the counterpart terminal; and
the controller is further configured for determining whether to execute the first communication service related to the priority information setting for the counterpart terminal if a call connection related to the transmitted call request signal fails.

11. A method of controlling a communication service in a mobile terminal, the method comprising:
receiving (S410, S1410), via a wireless communication unit of the mobile terminal, a priority information setting related to a first communication service for a counterpart terminal and substitute information setting including substitute information indicating that a second communication service is set to substitute for the first communication service, which can be performed on other terminals by the counterpart terminal;
storing, in a memory of the mobile terminal, the received priority information setting and counterpart information of the counterpart terminal to communicate with the counterpart terminal;
determining, via the controller, the received priority information setting;
executing, via the controller, a provision application related to the at least one communication service for the at least one other mobile terminal;
displaying (S440), via a display unit of the mobile terminal, the received priority information setting when the provision application is executed;
checking (S1430), via the controller, the memory for the counterpart information of the counterpart terminal corresponding to the received substitute information;
displaying (Figs. 16B-16C), the counterpart information, a first item (1621) indicating the first communication service and a second item (1622) indicating the second communication service; and
displaying (Fig. 16B), in the first item, a text indicating that the second communication service of the counterpart terminal is substituted for the first communication service.

## Patentansprüche

1. Mobiles Endgerät (100), mit:
einer Benutzereingabeeinheit (130);
einer Drahtloskommunikationseinheit (110), die dafür konfiguriert ist, eine Prioritätsinformationseinstellung, die mit einem ersten Kommunikationsdienst für ein Gegenstellen-Endgerät in Beziehung steht, und eine Ersetzungsinformationseinstellung zu empfangen, die Ersetzungsinformation enthält, die anzeigt, dass ein zweiter Kommunikationsdienst als Ersatz für den ersten Kommunikationsdienst gesetzt ist, der durch das Gegenstellen-Endgerät auf anderen Endgeräten ausgeführt werden kann;
einem Speicher (160), der dafür konfiguriert ist, die empfangene Prioritätsinformationseinstellung zu speichern und Gegenstelleninformation des Gegenstellen-Endgeräts zu speichern, um mit dem Gegenstellen-Endgerät zu kommunizieren;
einem Controller (180), der dafür konfiguriert ist, eine Bereitstellungsanwendung auszuführen, die mit dem ersten Kommunikationsdienst für das Gegenstellen-Endgerät in Beziehung steht, und die empfangene Prioritätsinformationseinstellung zu bestimmen; und
einer Displayeinheit (151), die dafür konfiguriert ist, die empfangene Prioritätsinformationseinstellung unter der Steuerung des Controllers darzustellen,
wobei der Controller ferner dafür konfiguriert ist, den Speicher hinsichtlich Gegenstelleninformation des Gegenstellen-Endgeräts zu prüfen, die der empfangenen Ersetzungsinformation entspricht, um zu veranlassen, dass die Displayeinheit die Gegenstelleninformation, ein den ersten Kommunikationsdienst anzeigendes erstes Element und ein den zweiten Kommunikationsdienst anzeigendes zweites Element darstellt, und zu veranlassen, dass die Displayeinheit im ersten Element einen Text darstellt, der anzeigt, dass der erste Kommunikationsdienst durch den zweiten Kommunikationsdienst des Gegenstellen-Endgeräts ersetzt wird.

2. Mobiles Endgerät nach Anspruch 1, wobei der erste Kommunikationsdienst mindestens einen Textchatdienst, einen Sprachchatdienst, einen Videochatdienst, einen Nachrichtendienst, einen E-Mail-Dienst, einen Videoanrufdienst, einen Dateiübertragungsdienst, einen Bild-Sharing-Dienst oder einen Video-Sharing-Dienst aufweist.

3. Mobiles Endgerät nach Anspruch 1 oder 2, wobei die Displayeinheit ferner dafür konfiguriert ist, eine Liste darzustellen, die die gespeicherte Gegenstelleninformation und Identifikationsinformation des ersten Kommunikationsdienstes enthält, der mit der Prioritätsinformationseinstellung in Beziehung steht.

4. Mobiles Endgerät nach Anspruch 3, wobei die Identifikationsinformation mindestens eine Bezeichnung, ein Symbol oder ein Bild des ersten Kommunikationsdienstes enthält, der mit der Prioritätsinformationseinstellung in Beziehung steht.

5. Mobiles Endgerät nach einem der Ansprüche 1 bis 4, wobei:
der zweite Kommunikationsdienst sich vom ersten Kommunikationsdienst unterscheidet, der mit der Prioritätsinformationseinstellung in Beziehung steht, und
der Controller ferner dafür konfiguriert ist, den zweiten Kommunikationsdienst, der mit der Ersetzungsinformationseinstellung in Beziehung steht, an Stelle des ersten Kommunikationsdienstes auszuführen, der mit der Prioritätsinformationseinstellung in Beziehung steht.

6. Mobiles Endgerät nach einem der Ansprüche 1 bis 5, wobei:
die Bereitstellungsanwendung ein Instant-Messaging-Dienst ist, der auch als IMS bezeichnet wird, und
die Drahtloskommunikationseinheit ferner dafür konfiguriert ist, sich anzumelden, um einen IMS-basierten Kommunikationsdienst mit dem Gegenstellen-Endgerät auszuführen.

7. Mobiles Endgerät nach einem der Ansprüche 1 bis 6, wobei:
die Benutzereingabeeinheit ferner dafür konfiguriert ist, eine Auswahl der Prioritätsinformationseinstellung und/oder der Ersetzungsinformationseinstellung für den ersten Kommunikationsdienst zu ermöglichen, und
die Drahtloskommunikationseinheit ferner dafür konfiguriert ist, die Prioritätsinformationseinstellung und/oder die Ersetzungsinformationseinstellung zu übertragen.

8. Mobiles Endgerät nach Anspruch 7, wobei die Benutzereingabeeinheit ferner dafür konfiguriert ist, eine Auswahl einer spezifischen Zeitzone und/oder eines spezifischen Orts als eine gültige Bedingung für die Auswahl der Prioritätsinformationseinstellung oder der Ersetzungsinformationseinstellung zu ermöglichen.

9. Mobiles Endgerät nach einem der Ansprüche 1 bis 8, wobei:
die Benutzereingabeeinheit ferner dafür konfiguriert ist, eine Eingabe von Suchkriterien zum Suchen der Gegenstelleninformation zu ermöglichen,
der Controller ferner dafür konfiguriert ist, die Gegenstelleninformation nach spezifischer Information zu durchsuchen, die den Eingabesuchkriterien entspricht, und
die Displayeinheit ferner dafür konfiguriert ist, den ersten Kommunikationsdienst, der mit der Prioritätsinformationseinstellung in Beziehung steht, für die gesuchte spezifische Information darzustellen.

10. Mobiles Endgerät nach einem der Ansprüche 1 bis 9, wobei:
die Drahtloskommunikationseinheit ferner dafür konfiguriert ist, ein Rufanforderungssignal an das Gegenstellen-Endgerät zu übertragen; und
der Controller ferner dafür konfiguriert ist, zu bestimmen, ob der erste Kommunikationsdienst, der mit der Prioritätsinformationseinstellung für das Gegenstellen-Endgerät in Beziehung steht, ausgeführt werden soll, wenn ein mit dem übertragenen Rufanforderungssignal in Beziehung stehender Rufaufbau fehlschlägt.

11. Verfahren zum Steuern eines Kommunikationsdienstes in einem mobilen Endgerät, wobei das Verfahren die Schritte aufweist:
Empfangen (S410, S1410) einer Prioritätsinformationseinstellung, die mit einem ersten Kommunikationsdienst für ein Gegenstellen-Endgerät in Beziehung steht, und einer Ersetzungsinformationseinstellung, die Ersetzungsinformation enthält, die anzeigt, dass ein zweiter Kommunikationsdienst als Ersatz für den ersten Kommunikationsdienst gesetzt ist, der durch das Gegenstellen-Endgerät auf anderen Endgeräten ausgeführt werden kann, über eine Drahtloskommunikationseinheit des mobilen Endgeräts;
Speichern der empfangenen Prioritätsinformationseinstellung und der Gegenstelleninformation des Gegenstellen-Endgeräts in einem Speicher des mobilen Endgeräts, um mit dem Gegenstellen-Endgerät zu kommunizieren;
Bestimmen der empfangenen Prioritätsinformationseinstellung durch den Controller;
Ausführen einer Bereitstellungsanwendung, die mit dem mindestens einen Kommunikationsdienst für das mindestens eine andere Endgerät in Beziehung steht, durch den Controller;
Darstellen (S440) der empfangenen Prioritätsinformationseinstellung durch eine Displayeinheit des mobilen Endgeräts, wenn die Bereitstellungsanwendung ausgeführt wird;
Prüfen (S1430) des Speichers hinsichtlich der Gegenstelleninformation des Gegenstellen-Endgeräts, die der empfangenen Ersetzungsinformation entspricht, durch den Controller;
Darstellen (Figuren 16B - 16C) der Gegenstelleninformation, eines den ersten Kommunikationsdienst anzeigenden ersten Elements (1621) und eines den zweiten Kommunikationsdienst anzeigenden zweiten Elements (1622); und
Darstellen (Fig. 16B) eines Textes, der anzeigt, dass der erste Kommunikationsdienst durch den zweiten Kommunikationsdienst des Gegenstellen-Endgeräts ersetzt wird, im ersten Element.

## Revendications

1. Terminal mobile (100) comprenant :
une unité d'entrée d'utilisateur (130) ;
une unité de communication sans fil (110) configurée pour recevoir un réglage d'informations prioritaires lié à un premier service de communication pour un terminal de contrepartie et un réglage d'informations de remplacement comprenant des informations de remplacement indiquant qu'un deuxième service de communication est établi pour remplacer le premier service de communication, qui peut être effectué sur d'autres terminaux par le terminal de contrepartie ;
une mémoire (160) configurée pour stocker le réglage d'informations prioritaires reçu et pour stocker des informations de contrepartie du terminal de contrepartie pour communiquer avec le terminal de contrepartie ;
un contrôleur (180) configuré pour exécuter une application de fourniture liée au premier service de communication pour le terminal de contrepartie et pour déterminer le réglage d'informations prioritaires reçu ; et
une unité d'affichage (151) configurée pour afficher le réglage d'informations prioritaires reçu sous le contrôle du contrôleur ;
dans lequel le contrôleur est configuré en outre pour contrôler la mémoire pour les informations de contrepartie du terminal de contrepartie correspondant aux informations de remplacement reçues, pour amener l'unité d'affichage à afficher les informations de contrepartie, un premier élément indiquant le premier service de communication et un deuxième élément indiquant le deuxième service de communication, et pour amener l'unité d'affichage à afficher, dans le premier élément, un texte indiquant que le deuxième service de communication du terminal de contrepartie est substitué au premier service de communication.

2. Terminal mobile selon la revendication 1, dans lequel le premier service de communication comprend au moins un service de discussion en ligne textuelle, un service de discussion en ligne vocale, un service de discussion en ligne vidéo, un service de messages, un service de courriels, un service d'appel vidéo, un service de transfert de fichiers, un service de partage d'images ou un service de partage de vidéo.

3. Terminal mobile selon l'une quelconque des revendications 1 et 2, dans lequel l'unité d'affichage est configurée en outre pour afficher une liste comprenant les informations de contrepartie stockées et des informations d'identification du premier service de communication lié au réglage d'informations prioritaires.

4. Terminal mobile selon la revendication 3, dans lequel les informations d'identification comprennent au moins un nom, une icône ou une image du premier service de communication lié au réglage d'informations prioritaires.

5. Terminal mobile selon l'une quelconque des revendications 1 à 4, dans lequel :
le deuxième service de communication est différent du premier service de communication lié au réglage d'informations prioritaires, et
le contrôleur est configuré en outre pour effectuer le deuxième service de communication lié au réglage d'informations de remplacement au lieu du premier service de communication lié au réglage d'informations prioritaires.

6. Terminal mobile selon l'une quelconque des revendications 1 à 5, dans lequel :
l'application de fourniture est un service de messagerie instantanée, désigné en outre comme IMS ; et
l'unité de communication sans fil est configurée en outre pour s'abonner pour effectuer un service de communication basé sur IMS avec le terminal de contrepartie.

7. Terminal mobile selon l'une quelconque des revendications 1 à 6, dans lequel :
l'unité d'entrée d'utilisateur est configurée en outre pour permettre une sélection d'au moins un parmi le réglage d'informations prioritaires et le réglage d'informations de remplacement pour le premier service de communication, et
l'unité de communication sans fil est configurée en outre pour transmettre l'au moins un sélectionné parmi le réglage d'informations prioritaires et les informations de remplacement.

8. Terminal mobile selon la revendication 7, dans lequel l'unité d'entrée d'utilisateur est configurée en outre pour permettre une sélection d'au moins un fuseau horaire spécifique ou un lieu spécifique comme une condition valide pour la sélection du réglage d'informations prioritaires ou du réglage d'informations de remplacement.

9. Terminal mobile selon l'une quelconque des revendications 1 à 8, dans lequel :
l'unité d'entrée d'utilisateur est configurée en outre pour permettre une entrée de critères de recherche pour chercher les informations de contrepartie,
le contrôleur est configuré en outre pour chercher les informations de contrepartie pour des informations spécifiques correspondant aux critères de recherche d'entrée, et
l'unité d'affichage est configurée en outre pour afficher le premier service de communication lié au réglage d'informations prioritaires pour les informations spécifiques recherchées.

10. Terminal mobile selon l'une quelconque des revendications 1 à 9, dans lequel :
l'unité de communication sans fil est configurée en outre pour transmettre un signal de demande d'appel au terminal de contrepartie ; et
le contrôleur est configuré en outre pour déterminer le fait d'exécuter le premier service de communication lié au réglage d'informations prioritaires pour le terminal de contrepartie si une connexion d'appel liée au signal de demande d'appel transmis échoue.

11. Procédé de commande d'un service de communication dans un terminal mobile, le procédé comprenant :
la réception (S410, S1410), par l'intermédiaire d'une unité de communication sans fil du terminal mobile, d'un réglage d'informations prioritaires lié à un premier service de communication pour un terminal de contrepartie et d'un réglage d'informations de remplacement comprenant des informations de remplacement indiquant qu'un deuxième service de communication est établi pour remplacer le premier service de communication, qui peut être effectué sur d'autres terminaux par le terminal de contrepartie ;
le stockage, dans une mémoire du terminal mobile, du réglage d'informations prioritaires reçu et d'informations de contrepartie du terminal de contrepartie pour communiquer avec le terminal de contrepartie ;
la détermination, par le biais du contrôleur, du réglage d'informations prioritaires reçu ;
l'exécution, par le biais du contrôleur, d'une application de fourniture liée l'au moins un service de communication pour l'au moins un autre terminal mobile ; et
l'affichage (S440), par le biais d'une unité d'affichage du terminal mobile, du réglage d'informations prioritaires reçu quand l'application de fourniture est exécutée ;
le contrôle (S1430), par le biais du contrôleur, de la mémoire pour les informations de contrepartie du terminal de contrepartie correspondant aux informations de remplacement reçues ;
l'affichage (FIG. 16B-16C), des informations de contrepartie, d'un premier élément (1621) indiquant le premier service de communication et d'un deuxième élément (1622) indiquant le deuxième service de communication ; et
l'affichage (FIG. 16B), dans le premier élément, d'un texte indiquant que le deuxième service de communication du terminal de contrepartie est substitué au premier service de communication.
